(19) Europäisches Patentamt
European Patent Office
Office européen des brevets

(11) **EP 4 733 821 A1**

(12) **EUROPEAN PATENT APPLICATION**
published in accordance with Art. 153(4) EPC

(43) Date of publication:
**29.04.2026  Bulletin 2026/18**

(21) Application number: **24825661.2**

(22) Date of filing: **27.05.2024**

(51) International Patent Classification (IPC):
**G02B 6/36** (2006.01)

(52) Cooperative Patent Classification (CPC):
**G02B 6/36**

(86) International application number:
**PCT/JP2024/019398**

(87) International publication number:
**WO 2024/262254 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.06.2023  JP 2023103573**

(71) Applicant: **Sumitomo Electric Industries, Ltd.**
**Osaka-shi, Osaka 541-0041 (JP)**

(72) Inventors:
• **HAJI, Kohei**
  **Osaka-shi, Osaka 541-0041 (JP)**
• **MORISHIMA, Tetsu**
  **Osaka-shi, Osaka 541-0041 (JP)**

(74) Representative: **TBK**
**Bavariaring 4-6**
**80336 München (DE)**

(54) **OPTICAL FIBER HOLDING COMPONENT, OPTICAL FIBER COUPLING STRUCTURE, OPTICAL CONNECTOR, OPTICAL COUPLING STRUCTURE, AND METHOD FOR MANUFACTURING OPTICAL FIBER COUPLING STRUCTURE**

(57)    An optical fiber holding component according to the present disclosure comprises: a first surface and a second surface that are arranged in a first direction; and a plurality of through-holes that penetrate in a first direction between the first surface and the second surface. Each optical fiber of a plurality of optical fibers includes: an insertion part that is inserted and held in each through-hole of the plurality of through-holes; and a projection part that projects outward from the through-hole and is inserted into each ferrule hole of a plurality of ferrule holes. The minimum value of the inner diameter of the through-hole is equal to or greater than the maximum value of the outer diameter of the insertion part. When the center axis of insertion part is maximally inclined with respect to the center axis of the through-hole within the through-hole in a state where the center axis of the ferrule hole coincides with the center axis of the through-hole when viewed along the first direction, a tip of the projection part is located inside the inner surface of the ferrule hole when viewed along the first direction.

**FIG. 10**

## Description

TECHNICAL FIELD

The present disclosure relates to an optical-fiber holding component, an optical-fiber coupling structure body, an optical connector, an optical coupling structure, and a method of manufacturing the optical-fiber coupling structure body. This application claims priority based on Japanese Patent Application No. 2023-103573 filed on June 23, 2023, the entire contents of which are incorporated herein by reference.

BACKGROUND ART

Conventionally, as an optical-fiber holding component for holding a plurality of optical fibers, a hole array described in Patent Literature 1 is known. The hole array is provided with holding holes each holding a corresponding one of the plurality of optical fibers. The plurality of optical fibers are inserted into the inside of a ferrule in a state of being held in the plurality of holding holes. The tip portions of the plurality of optical fibers extend from the hole array and are each inserted into a corresponding one of a plurality of ferrule holes formed in the ferrule.

CITATION LIST

PATENT LITERATURE

Patent Literature 1: WO 2018/135368

SUMMARY OF INVENTION

An optical-fiber holding component according to an embodiment of the present disclosure is an optical-fiber holding component configured to be disposed inside a ferrule having a plurality of ferrule holes and to hold a plurality of optical fibers each inserted into a corresponding one of the plurality of ferrule holes. The optical-fiber holding component includes a first surface and a second surface aligned in a first direction, and a plurality of through holes extending between the first surface and the second surface through the optical-fiber holding component in the first direction, the plurality of through holes being arranged to be aligned in a second direction so as to correspond to the plurality of ferrule holes, the second direction intersecting the first direction. Each of the plurality of optical fibers includes an inserted portion inserted into and held in a corresponding through hole among the plurality of through holes, and a protruding portion protruding outside from the corresponding through hole and inserted into a corresponding ferrule hole among the plurality of ferrule holes. A minimum value of an inner diameter of each of the through holes is greater than or equal to a maximum value of an outer diameter of each of the inserted portions. A tip of the protruding portion as viewed in the first direction is located inward of an inner surface of the corresponding ferrule hole when a central axis of the inserted portion is inclined inside the corresponding through hole to a maximum extent with respect to a central axis of the corresponding through hole in a state in which a central axis of the corresponding ferrule hole coincides, when viewed in the first direction, with the central axis of the corresponding through hole.

BRIEF DESCRIPTION OF THE DRAWINGS

[FIG. 1] FIG. 1 is a perspective view of an optical-fiber holding component according to an embodiment.
[FIG. 2] FIG. 2 is a cross-sectional view of the optical-fiber holding component of FIG. 1.
[FIG. 3] FIG. 3 is a cross-sectional view of an optical-fiber coupling structure body including the optical-fiber holding component of FIG. 1.
[FIG. 4] FIG. 4 is a front view of the optical-fiber coupling structure body of FIG. 3 (a).
[FIG. 5] FIG. 5 is a cross-sectional view for explaining an example of a method of manufacturing the optical-fiber coupling structure body.
[FIG. 6] FIG. 6 is an exploded perspective view of the optical connector including the optical-fiber coupling structure body of FIG. 3.
[FIG. 7] FIG. 7 is a perspective view of the optical connector of FIG. 6.
[FIG. 8] FIG. 8 is a cross-sectional view of the optical connector of FIG. 7.
[FIG. 9] FIG. 9 is a perspective view illustrating an optical coupling structure including a first optical connector and a second optical connector as optical connectors.

[FIG. 10] FIG. 10 is a diagram for explaining a method of setting an inner diameter of a through hole of the optical-fiber holding component.

[FIG. 11] FIG. 11 is a front view of the optical-fiber holding component of FIG. 10.

[FIG. 12] FIG. 12 is a diagram for explaining a problem of an optical-fiber holding component according to a comparative example.

[FIG. 13] FIG. 13 is a cross-sectional view of an optical connector according to a modification 1.

[FIG. 14] FIG. 14 is a diagram for explaining a method of setting an inner diameter of a through hole of an optical-fiber holding component included in the optical connector of FIG. 13.

[FIG. 15] FIG. 15 is a front view of the optical-fiber holding component of FIG. 14.

[FIG. 16a] FIG. 16a is a cross-sectional view of an optical connector according to a modification 2.

[FIG. 16b] FIG. 16b is a plan view of an optical-fiber holding component included in the optical connector of FIG. 16a.

[FIG. 17] FIG. 17 is a perspective view of another example of the optical-fiber holding component of FIG. 16b.

[FIG. 18a] FIG. 18a is a cross-sectional view of an optical connector according to a modification 3.

[FIG. 18b] FIG. 18b is a plan view of an optical-fiber holding component included in the optical connector of FIG. 18a.

DETAILED DESCRIPTION

[Problems to be Solved by Present Disclosure]

When the hole array described above is mounted on the ferrule, the optical fiber may be fixed in an inclined state in the holding hole of the hole array. In this case, even if the hole array is inserted straight inside the ferrule, the tip of the optical fiber protruding from the hole array may abut against the wall surface around the ferrule hole, and the tip portion of the optical fiber may not be inserted into the ferrule hole. In contrast, for example, it is conceivable to shift the hole array vertically with respect to the ferrule and forcibly insert the tip portion of the optical fiber into the ferrule hole while pressing the tip portion against the inner surface of the ferrule hole. However, in such a method, the tip portion of the optical fiber is in strong contact with the inner surface of the ferrule hole, and thus a large load may be applied to the optical fiber. Such a load may cause a problem such as damage to the optical fiber or deterioration of optical transmission characteristics, and thus may cause deterioration of the reliability of the optical fiber.

The present disclosure provides an optical-fiber holding component, an optical-fiber coupling structure body, an optical connector, an optical coupling structure, and a method of manufacturing the optical-fiber coupling structure body, which can enhance the reliability of an optical fiber.

[Advantageous Effects of Present Disclosure]

According to the optical-fiber holding component, the optical-fiber coupling structure body, the optical connector, the optical coupling structure, and the method of manufacturing the optical-fiber coupling structure body of the present disclosure, the reliability of the optical fiber can be enhanced.

[Description of Embodiments of Present Disclosure]

First, the contents of the embodiments of the present disclosure will be listed and described.

(1) An optical-fiber holding component according to an embodiment of the present disclosure is an optical-fiber holding component configured to be disposed inside a ferrule having a plurality of ferrule holes and to hold a plurality of optical fibers each inserted into a corresponding one of the plurality of ferrule holes. The optical-fiber holding component includes a first surface and a second surface aligned in a first direction, and a plurality of through holes extending between the first surface and the second surface through the optical-fiber holding component in the first direction, the plurality of through holes being arranged to be aligned in a second direction so as to correspond to the plurality of ferrule holes, the second direction intersecting the first direction. Each of the plurality of optical fibers includes an inserted portion inserted into and held in a corresponding through hole among the plurality of through holes, and a protruding portion protruding outside from the corresponding through hole and inserted into a corresponding ferrule hole among the plurality of ferrule holes. A minimum value of an inner diameter of each of the through holes is greater than or equal to a maximum value of an outer diameter of each of the inserted portions. A tip of the protruding portion as viewed in the first direction is located inward of an inner surface of the corresponding ferrule hole when a central axis of the inserted portion is inclined inside the corresponding through hole to a maximum extent with respect to a central axis of the corresponding through hole in a state in which a central axis of the corresponding ferrule hole coincides, when viewed in the first direction, with the central axis of the corresponding through hole.

In the optical-fiber holding component, the inserted portions of the plurality of optical fibers are inserted and held in the plurality of through holes penetrating between the first surface and the second surface in the first direction. In this state, the protruding portion of each optical fiber protrudes from the through hole to the outside and is inserted into each ferrule hole. In the above configuration, when the central axis of the inserted portion of the optical fiber is inclined inside the through hole to the maximum extent with respect to the central axis of the through hole in a state where the central axis of the through hole coincides with the central axis of the ferrule hole when viewed along the first direction, the tip of the protruding portion is located inward of the inner surface of the ferrule hole as viewed along the first direction. In this case, no matter at which angle the inserted portion of the optical fiber is inclined inside the through hole, when the optical-fiber holding component is inserted inside the ferrule, the tip of the protruding portion does not strongly abut against the inner surface of the ferrule hole or the wall surface around the ferrule hole, and the protruding portion can be reliably inserted into the ferrule hole. Thus, a large load applied to the optical fiber can be reduced. As a result, it is possible to reduce the occurrence of problems such as damage to the optical fiber or deterioration of the optical transmission characteristics. Thus, according to the optical-fiber holding component, it is possible to improve the reliability of the optical fiber.

(2) In the optical-fiber holding component according to (1), a maximum value of an inner diameter of each of the through holes may be less than a maximum value of an inner diameter of each of the ferrule holes. By reducing the maximum value of the inner diameter of the through hole in this manner, the inclination of the inserted portion inside the through hole can be reduced. Thus, the offset of the tip of the protruding portion from the through hole can be reduced. As a result, when the optical-fiber holding component is inserted into the inside of the ferrule, the protruding portion can be more reliably inserted into the ferrule hole without strongly abutting the tip against the inner surface of the ferrule hole or the like.

(3) In the optical-fiber holding component according to (1) or (2), each of the optical fibers may include a covering-removed portion where a portion of covering is removed from the tip, and a covered portion where the covering remains. Only one of the covering-removed portion and the covered portion, the one being the covering-removed portion, may be inserted as the inserted portion into the corresponding through hole In this case, since the maximum value of the inner diameter of the through hole can be reduced in accordance with the outer diameter of the covering-removed portion, the inclination of the inserted portion inside the through hole can be reduced. Thus, the offset of the tip of the protruding portion from the through hole can be reduced. As a result, when the optical-fiber holding component is inserted into the inside of the ferrule, the protruding portion can be more reliably inserted into the ferrule hole without strongly abutting the tip against the inner surface of the ferrule hole or the like.

(4) The optical-fiber holding component according to (3) may further include a support portion disposed between each of the through holes and the second surface in the first direction and configured to be able to support the covered portions arranged outside the through holes. In this case, the covered portion of the optical fiber is supported by the support portion of the optical-fiber holding component, so that the inclination of the inserted portion inside the through hole can be more reduced. Thus, the offset of the tip of the protruding portion from the through hole can be more reduced. As a result, when the optical-fiber holding component is inserted into the inside of the ferrule, the protruding portion can be more reliably inserted into the ferrule hole without strongly abutting the tip against the inner surface of the ferrule hole or the like.

(5) In the optical-fiber holding component according to (1) or (2), each of the optical fibers may include a covering-removed portion where a portion of covering is removed from the tip, and a covered portion where the covering remains. Only one of the covering-removed portion and the covered portion, the one being the covered portion, may be inserted as the inserted portion into the corresponding through hole. In this case, the maximum value of the inner diameter of the through hole is set to be large in accordance with the outer diameter of the covered portion. Thus, the allowable range of the offset of the tip from the through hole is reduced for preventing the tip of the protruding portion from coming into contact with the inner surface of the ferrule hole. As a result, when the protruding portion is inserted into the ferrule hole, the tip is likely to abut against the inner surface of the ferrule hole. In contrast, according to the above-described optical-fiber holding component, no matter at which angle the inserted portion is inclined inside the through hole, as a result, when the optical-fiber holding component is inserted inside the ferrule, the protruding portion can be more reliably inserted into the ferrule hole without strongly abutting the tip against the inner surface of the ferrule hole or the like.

(6) In the optical-fiber holding component according to any one of (1) to (5), each of the through holes may include a constant-diameter portion configured to be able to hold the inserted portion and having a constant inner diameter in the first direction, and a diameter-increasing portion formed between the constant-diameter portion and the second surface in the first direction and having an inner diameter increasing from the constant-diameter portion toward the second surface in the first direction. In this case, when the optical fiber is inserted into the through hole, the tip of the optical fiber is guided to the constant-diameter portion by the diameter-increasing portion, and thus, it is possible to reduce the possibility that the tip of the optical fiber comes into strong contact with the inner surface of the through hole. Thus, a large load applied to the optical fiber can be more reliably reduced.

(7) In the optical-fiber holding component according to any one of (1) to (6), each of the through holes may be configured to hold the inserted portion such that the inserted portion is rotatable about the central axis of the inserted portion. In this case, the rotational position of the inserted portion of the optical fiber can be adjusted. During this adjustment, the inserted portion of the optical fiber is likely to be inclined. Thus, the above configuration can effectively achieve the above-described effects.

(8) In the optical-fiber holding component according to any one of (1) to (7), each of the optical fibers may include at least one core in a region offset from a central axis of the optical fiber. In this case, the rotational position of the inserted portion of the optical fiber can be adjusted. During this adjustment, the inserted portion of the optical fiber is likely to be inclined. Thus, the above configuration can effectively achieve the above-described effects.

(9) The optical-fiber holding component according to any one of (1) to (8) may further include a third surface connecting the first surface and the second surface in the first direction, and a plurality of injection holes extending from the third surface so as to intersect the plurality of through holes and each being in communication individually with a corresponding one of the plurality of through holes, the plurality of injection holes being configured such that an adhesive for bonding the plurality of optical fibers to the plurality of through holes is injectable into the plurality of injection holes. In this case, when the optical fiber is fixed to the through hole using the adhesive, the adhesive can be individually injected into the through hole from a path different from the through hole. In consideration of the fluidity of the adhesive, the position of the injection hole with respect to the through hole, the amount of the adhesive to be injected, and the like are adjusted, so that the adhesive can be reliably filled between the optical fiber and the through hole without a gap. Thus, since the adhesive can be distributed around the optical fiber without deviation, the stress generated when the adhesive is cured can be uniformly applied to the optical fiber. As a result, it is possible to reduce the occurrence of inclination of the optical fiber due to the stress received in one direction. Thus, the protruding portion can be more reliably inserted into the ferrule hole without strongly abutting the tip against the inner surface of the ferrule hole or the like when the optical-fiber holding component is inserted into the inside of the ferrule.

(10) An optical-fiber coupling structure body according to an embodiment of the present disclosure includes the optical-fiber holding component according to any one of (1) to (9), and the plurality of optical fibers each inserted into the corresponding one of the plurality of through holes and each fixed to the corresponding one of the plurality of through holes by a cured product of an adhesive. Since the optical-fiber coupling structure body includes any one of the above-described optical-fiber holding components, the reliability of the optical fiber can be enhanced as described above.

(11) An optical connector according to an embodiment of the present disclosure includes the optical-fiber coupling structure body according to (10), and the ferrule into which the optical-fiber coupling structure body is inserted. The protruding portions of the plurality of optical fibers are each inserted into a corresponding one of the plurality of ferrule holes. Since the optical connector includes the above-described optical-fiber coupling structure body, the reliability of the optical fiber can be enhanced as described above.

(12) An optical coupling structure according to an embodiment of the present disclosure includes a first optical connector and a second optical connector each as the optical connector according to (11). The first optical connector and the second optical connector face each other with a gap therebetween in the first direction. Since the optical coupling structure includes the above-described optical connector, the reliability of the optical fiber can be enhanced as described above. Further, when the first optical connector and the second optical connector are not connected by physical contact (PC), a pressing force for connecting the first optical connector and the second optical connector by PC is not required, and thus a larger number of optical fibers can be easily connected at once.

(13) A method of manufacturing the optical-fiber coupling structure body according to an embodiment of the present disclosure is a method of manufacturing the optical-fiber coupling structure body according to (10). The method includes preparing an auxiliary optical-fiber holding component and a fixation optical-fiber holding component each as the optical-fiber holding component, aligning the auxiliary optical-fiber holding component with the fixation optical-fiber holding component in the first direction, inserting the optical fibers in the first direction from the through holes of the fixation optical-fiber holding component into the through holes of the auxiliary optical-fiber holding component in a state in which the auxiliary optical-fiber holding component and the fixation optical-fiber holding component are aligned in the first direction, fixing the inserted portions to the fixation optical-fiber holding component by injecting an adhesive into the through holes of the fixation optical-fiber holding component and curing the adhesive in a state in which the inserted portions of the optical fibers are inserted into the through holes of the fixation optical-fiber holding component and in which the protruding portions of the optical fibers are inserted into the through holes of the auxiliary optical-fiber holding component, and removing the auxiliary optical-fiber holding component in a state in which the inserted portions are fixed to the fixation optical-fiber holding component. In this case, the auxiliary optical-fiber holding component is used as a jig for regulating the position of the tip of the protruding portion of the optical fiber protruding from the through hole of the fixation optical-fiber holding component. In this manner, the position of the tip of the protruding portion is regulated by the inner surface of the through hole of the auxiliary optical-fiber holding component, so that it is possible to reduce the large offset of the position of the tip of the protruding portion to the outside of the through hole. Furthermore, by aligning a plurality of optical-fiber holding components in the first direction in this manner, the overall length of these optical-fiber holding components in the first direction is increased. As the overall length increases, the inclination that may occur in the inserted portion of the optical fiber inserted into the through hole of these optical-fiber holding components is reduced. As a result, when the optical fiber held by the fixation optical-fiber holding component is inserted into the inside of the ferrule, the protruding portion can be more reliably inserted into the ferrule hole without strongly abutting the tip against the inner surface of the ferrule hole or the like.

(14) In the method of manufacturing the optical-fiber coupling structure body according to (13), the aligning of the auxiliary optical-fiber holding component with the fixation optical-fiber holding component in the first direction may include bringing the auxiliary optical-fiber holding component into contact with the fixation optical-fiber holding component in the first direction such that the through holes of the auxiliary optical-fiber holding component are in communication with the through holes of the fixation optical-fiber holding component in the first direction. In this case, when the optical fiber is inserted from the through hole of the fixation optical-fiber holding component into the through hole of the auxiliary optical-fiber holding component, the protruding portion of the optical fiber can be easily and reliably inserted into the through hole of the auxiliary optical-fiber holding component, as compared with a case where the auxiliary optical-fiber holding component is disposed with a gap from the fixation optical-fiber holding component.

[Details of Embodiments of Present Disclosure]

Specific examples of an optical-fiber holding component, an optical-fiber coupling structure body, an optical connector, and an optical coupling structure according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference signs in the description of the drawings, and redundant description will be omitted as appropriate.

[Embodiment]

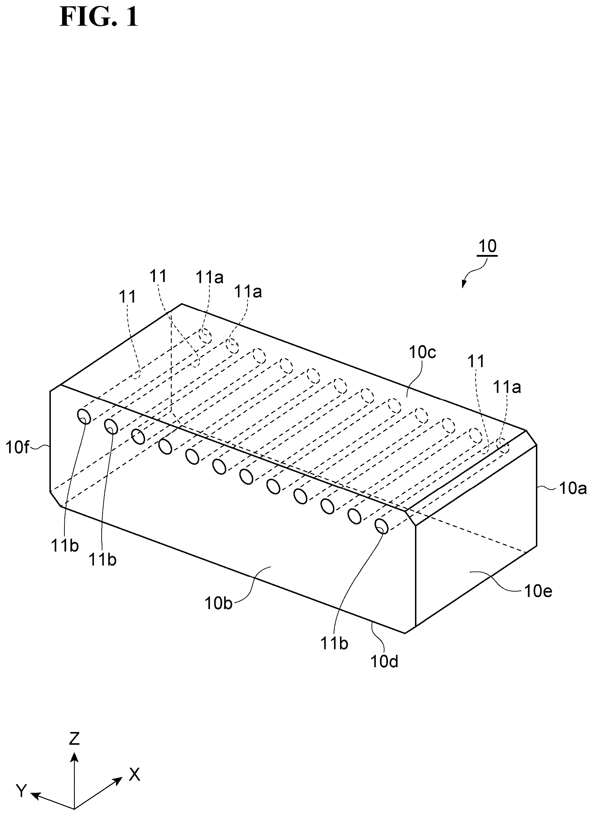

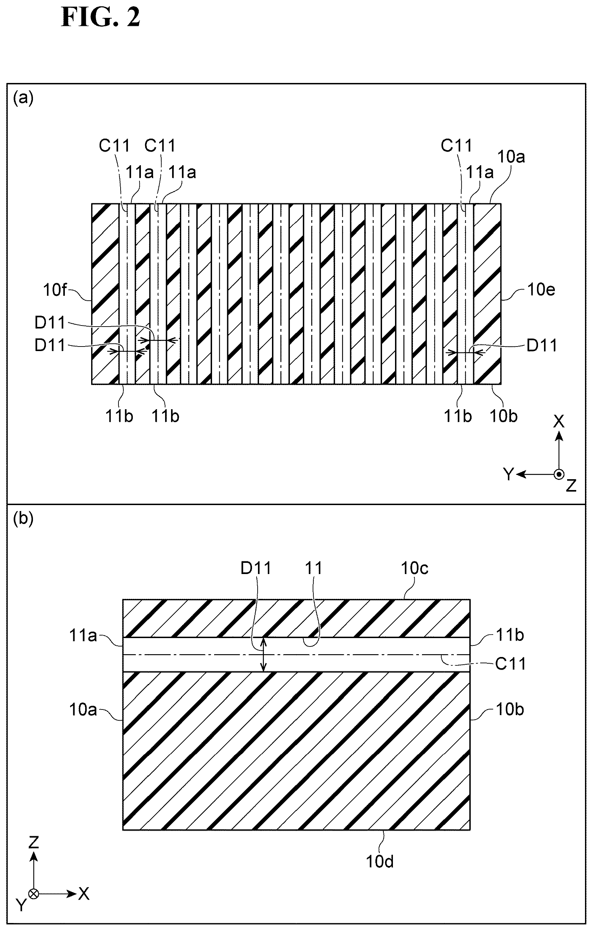

FIG. 1 is a perspective view of an optical-fiber holding component 10 according to the embodiment. FIG. 2 (a) is a cross-sectional view of the optical-fiber holding component 10. FIG. 2 (b) is another cross-sectional view of the optical-fiber holding component 10. In each figure, an XYZ orthogonal coordinate system is illustrated. The optical-fiber holding component 10 has, for example, a rectangular parallelepiped appearance with a Y direction (an example of a "second direction" in the present disclosure) as a longitudinal direction, an X direction (an example of a "first direction" in the present disclosure) as a lateral direction, and a Z direction as a thickness direction. In the following description, "up and down" may be defined by a relative position of a Z coordinate, "front and rear" may be defined by a relative position of an X coordinate, and "left and right" may be defined by a relative position of a Y coordinate. The larger Z coordinate is "up". The larger X coordinate is "front". The larger Y coordinate is "right".

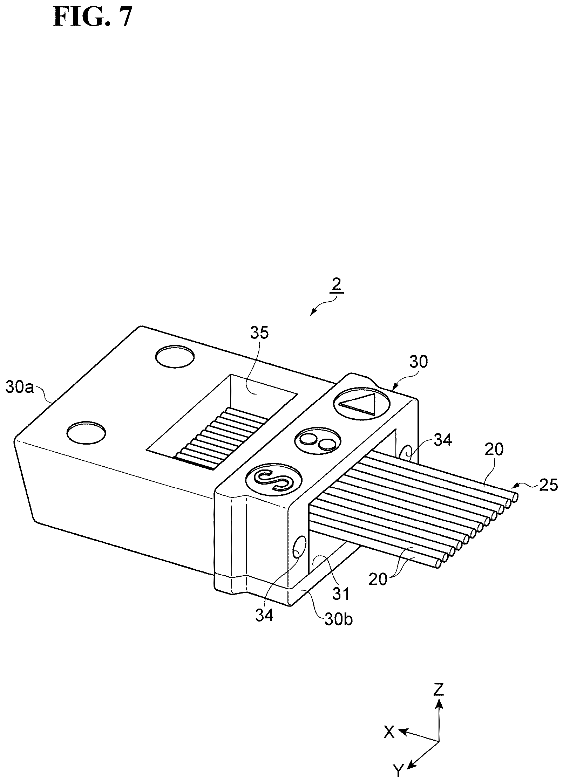

The optical-fiber holding component 10 is disposed inside a ferrule 30 in a state of holding a plurality of optical fibers 20 (see FIG. 7 to be described later). The optical-fiber holding component 10 is made of a material such as a resin or quartz glass that is able to transmit ultraviolet rays used when an ultraviolet curable adhesive is cured. In this case, the optical-fiber holding component 10 can be manufactured at low cost and with high accuracy. The optical-fiber holding component 10 may be made of, for example, metal. In this case, since high dimensional accuracy can be maintained, the optical-fiber holding component 10 can be manufactured with higher accuracy. When the optical-fiber holding component 10 is made of quartz glass or metal, the frictional resistance between the optical-fiber holding component 10 and the plurality of optical fibers 20 can be reduced.

As illustrated in FIG. 1, the optical-fiber holding component 10 includes, for example, a front surface 10a (an example of a "first surface" of the present disclosure), a rear surface 10b (an example of a "second surface" of the present disclosure), an upper surface 10c, a lower surface 10d, a side surface 10e, and a side surface 10f. The front surface 10a is an end surface located at a front end of the optical-fiber holding component 10 in the X direction. The rear surface 10b is an end surface located at a rear end of the optical-fiber holding component 10 in the X direction. The front surface 10a and the rear surface 10b are, for example, planes along the YZ plane, and are arranged side by side along the X direction. The normal direction of the front surface 10a coincides with the normal direction of the rear surface 10b, for example.

The upper surface 10c is an end surface located at the upper end of the optical-fiber holding component 10 in the Z direction. The lower surface 10d is an end surface located at a lower end of the optical-fiber holding component 10 in the Z direction. The upper surface 10c and the lower surface 10d are, for example, planes along the XY plane, and are disposed on both sides of a plurality of through holes 11 described later interposed therebetween in the Z direction. The upper surface 10c and the lower surface 10d connect the front surface 10a and the rear surface 10b in the X direction. The normal direction of the upper surface 10c coincides with, for example, the normal direction of the lower surface 10d. The upper surface 10c and the lower surface 10d may be, for example, perpendicular to the front surface 10a and the rear surface 10b.

The side surface 10e is an end surface located at a first end of the optical-fiber holding component 10 in the Y direction. The side surface 10f is, for example, an end surface located at a second end of the optical-fiber holding component 10 in the Y direction. The side surface 10e and the side surface 10f are, for example, planes along the XZ plane, and are disposed on both sides with the plurality of through holes 11 interposed therebetween in the Y direction. The side surface 10e and the side surface 10f connect the front surface 10a and the rear surface 10b in the X direction. The normal direction of the side surface 10e coincides with the normal direction of the side surface 10f, for example. The side surface 10e and the side surface 10f may be perpendicular to the front surface 10a, the rear surface 10b, the upper surface 10c, and the lower surface 10d, for example.

The optical-fiber holding component 10 further includes the plurality of through holes 11 penetrating from the front surface 10a to the rear surface 10b in the X direction. The through holes 11 extend along the X direction and are arranged in a line along the Y direction, for example. Each through hole 11 is formed, for example, at a position closer to the upper surface 10c than to the lower surface 10d in the Z direction. In the embodiment, a case where 12 through holes 11 are arranged in a line (12 × 1 line) at equal intervals in the Y direction is illustrated. However, the number of through holes 11 is not limited to 12, and may be another number such as 4, 8, or 16. The through holes 11 do not need to be arranged in a line, and may be arranged in two or more lines.

FIG. 2 (a) illustrates a cross-section of the optical-fiber holding component 10 in the XY plane passing through a central axis C11 of each through hole 11. FIG. 2 (b) illustrates a cross-section of the optical-fiber holding component 10 in the XZ plane passing through the central axis C11 of each through hole 11. The central axis C11 is an axis passing through the center of the through hole 11 when the through hole 11 is cut along a plane orthogonal to the X direction. As illustrated in FIG. 2 (a), the through holes 11 extend linearly along the X direction, and are arranged at equal intervals along the Y direction, for example. Each through hole 11 has, for example, a circular shape centered on the central axis C11 when viewed along the X direction in which the central axis C11 extends. An inner diameter D11 of each through hole 11 is, for example, constant at each position along the X direction. An opening 11a, which is a first end of each through hole 11, is formed in the front surface 10a. An opening 11b, which is a second end of each through hole 11, is formed in the rear surface 10b.

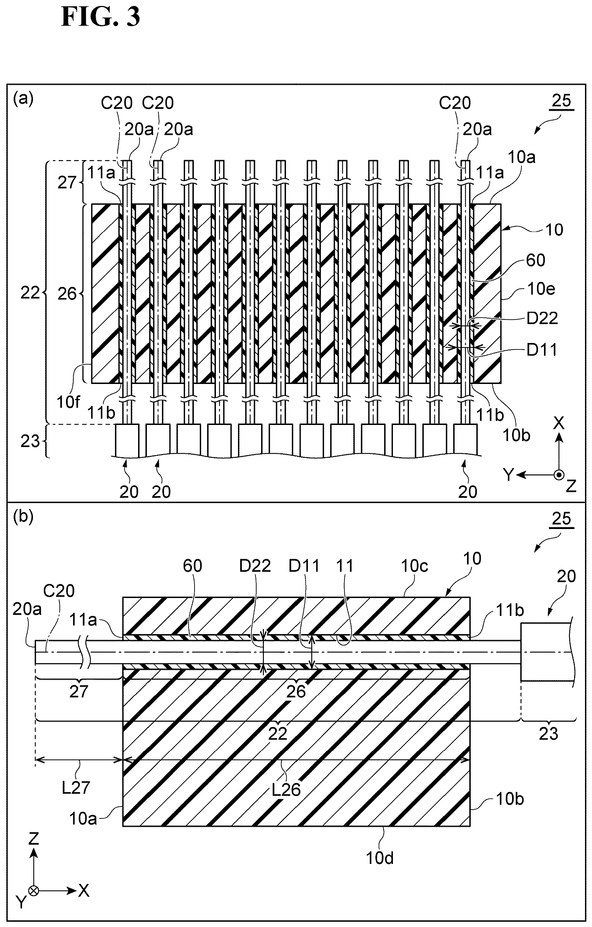

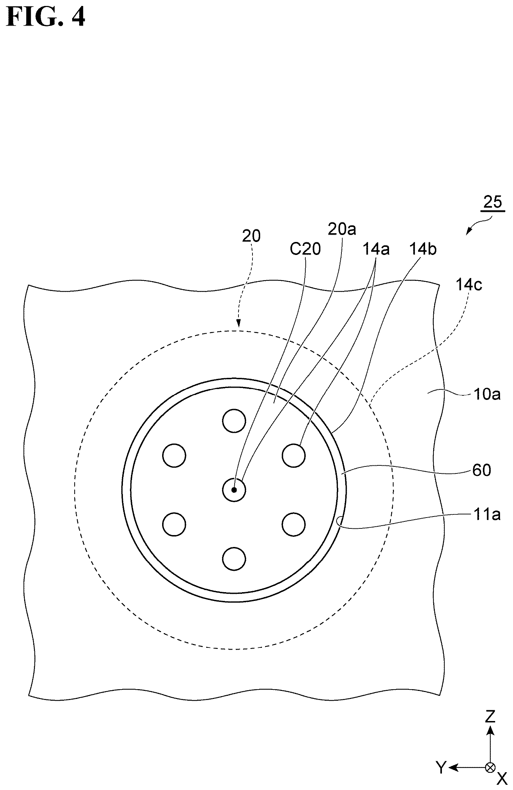

FIG. 3 (a) is a cross-sectional view of an optical-fiber coupling structure body 25 including the optical-fiber holding component 10. FIG. 3 (b) is another cross-sectional view of the optical-fiber coupling structure body 25. FIG. 4 is a front view of the optical-fiber coupling structure body 25. FIGS. 3 (a) and 3 (b) illustrate cross-sectional views corresponding to FIGS. 2 (a) and 2 (b), respectively. As illustrated in FIGS. 3 (a) and 3 (b), the optical-fiber coupling structure body 25 includes the above-described optical-fiber holding component 10 and the plurality of optical fibers 20. The optical fibers 20 are fixed to the inner surfaces of the through holes 11 by a cured product 60 of an adhesive in a state where the optical fibers 20 are inserted into the through holes 11 of the optical-fiber holding component 10. In this state, a tip surface 20a (an example of "tip" in the present disclosure) of each optical fiber 20 protrudes forward from the opening 11a of each through hole 11. The cured product 60 of the adhesive is, for example, a cured product of an ultraviolet (UV) curable resin. The cured product 60 of the adhesive may be a cured product of a thermosetting resin.

The optical fiber 20 is, for example, an optical fiber that requires rotational alignment (i.e., adjustment of the position around a central axis C20). Each optical fiber 20 is, for example, a multi core fiber (MCF). Each optical fiber 20 may be, for example, a polarization maintaining fiber (PMF). As illustrated in FIG. 4, the optical fiber 20 includes a plurality of cores 14a, a cladding 14b covering the plurality of cores 14a, and a covering 14c surrounding the cladding 14b. At least one of the plurality of cores 14a is disposed in a region excluding the central axis C20, that is, a region offset from the central axis C20. The central axis C20 is an axis passing through the center of the optical fiber 20 when the optical fiber 20 is cut along a plane orthogonal to the X direction.

As illustrated in FIGS. 3 (a) and 3 (b), the optical fiber 20 includes a covering-removed portion 22 and a covered portion 23. The covering-removed portion 22 is a portion of the optical fiber 20 from which the covering 14c (see FIG. 4) of a predetermined length is removed from the tip surface 20a. The covering-removed portion 22 includes the plurality of cores 14a and the cladding 14b. In the covering-removed portion 22, the surface of the cladding 14b is exposed to the outside. The covered portion 23 is a portion of the optical fiber 20 where the covering 14c remains. The covered portion 23 includes the plurality of cores 14a, the cladding 14b, and the covering 14c. The outer diameter of the covered portion 23 is larger than the outer diameter of the covering-removed portion 22 by the thickness of the covering 14c.

The covering-removed portion 22 includes, for example, an inserted portion 26 inserted into and held in the through hole 11 and a protruding portion 27 protruding from the through hole 11. The inserted portion 26 is, for example, an intermediate portion of the covering-removed portion 22 from the inner portion of the opening 11b of the through hole 11 to the inner portion of the opening 11a of the through hole 11. The protruding portion 27 is, for example, a tip portion from the inner portion of the opening 11a to the tip surface 20a in the covering-removed portion 22. That is, the protruding portion 27 is, for example, a portion of the covering-removed portion 22 that protrudes forward from the front surface 10a on which the opening 11a is formed. The protruding portion 27 extends in the X direction so as to be away from the through hole 11 on the outside of the through hole 11.

A length L27 of the protruding portion 27 from the front surface 10a to the tip surface 20a along the X direction corresponds to the distance from the front surface 10a to a front surface 30a of the ferrule 30 (see FIG. 7 described later) along the X direction. A length L26 of the inserted portion 26 from the front surface 10a to the rear surface 10b along the X direction corresponds to the length of the through hole 11 along the X direction. Thus, in the covering-removed portion 22, a portion from the rear end of the protruding portion 27 inside the opening 11a to a position away backward by the length of the through hole 11 along the X direction is the inserted portion 26. The inserted portion 26 is inserted into the through hole 11 from the opening 11b in the X direction and fixed to the inner surface of the through hole 11 by the cured product 60 of the adhesive. As a result, the inserted portion 26 is held in the through hole 11. In a state where the inserted portion 26 is held in the through hole 11, the central axis C20 of the inserted portion 26 coincides with, for example, the central axis C11 of the through hole 11 (see FIG. 2 (a)).

The through hole 11 is configured to hold the inserted portion 26 such that the inserted portion 26 is rotatable about the central axis C20. The through hole 11 being configured to hold the inserted portion 26 such that the inserted portion 26 is rotatable about the central axis C20 means that the inner diameter D11 of the through hole 11 is set to be large enough to allow the rotation of the inserted portion 26 about the central axis C20 and small enough to define the position of the inserted portion 26 in the YZ plane. In the present specification, the expression "the inner diameter is constant" includes both a case where the inner diameter is completely constant and a case where the inner diameter is substantially constant within a range of a manufacturing error or the like. The inner diameter D11 of the through hole 11 is, for example, larger than the outer diameter of the inserted portion 26, i.e., an outer diameter D22 of the covering-removed portion 22.

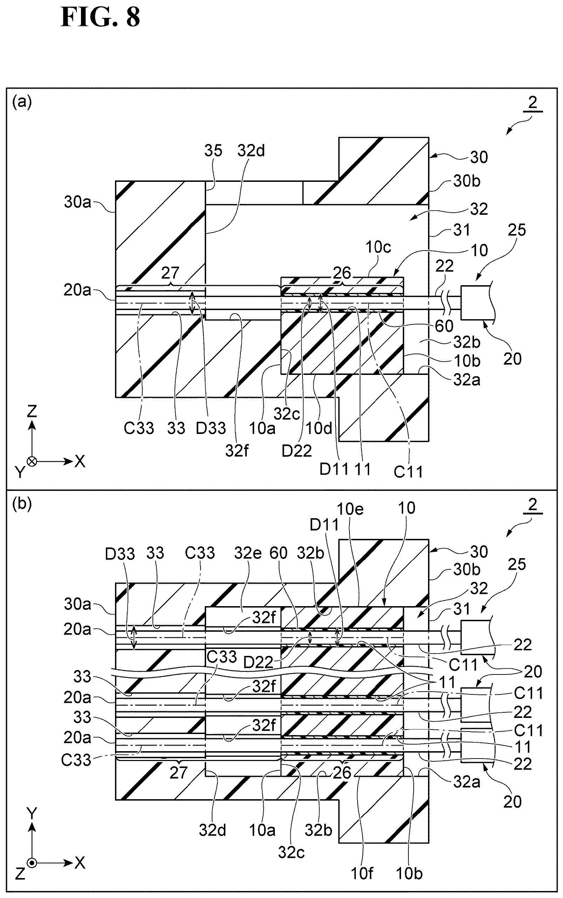

On the other hand, when the inner diameter D11 of the through hole 11 is too large, the position of the inserted portion 26 in the YZ plane with respect to the through hole 11 is not fixed, and the posture of the inserted portion 26 may be greatly inclined inside the through hole 11. When the inserted portion 26 is fixed to the inner surface of the through hole 11 by the cured product 60 of the adhesive in a state where the inserted portion 26 is greatly inclined inside the through hole 11, the tip surface 20a of the optical fiber 20 may be greatly offset outward in the radial direction of the through hole 11. As a result, when the optical-fiber coupling structure body 25 is inserted into the inside of the ferrule 30 (see FIG. 8), it may be difficult to insert the protruding portion 27 of the optical fiber 20 into a ferrule hole 33. Thus, in the embodiment, the inner diameter D11 of the through hole 11 is set to be small such that the inclination of the inserted portion 26 inside the through hole 11 is reduced. A specific method of setting the inner diameter D11 of the through hole 11 will be described later.

In the embodiment, as illustrated in FIGS. 3 (a) and 3 (b), the entire inserted portion 26 is included in the covering-removed portion 22. That is, only the covering-removed portion 22 of the covering-removed portion 22 and the covered portion 23 is inserted into and held in the through hole 11 as the inserted portion 26. However, the entire inserted portion 26 may be included in the covered portion 23. That is, only the covered portion 23 of the covering-removed portion 22 and the covered portion 23 may be inserted into and held in the through hole 11 as the inserted portion 26. Alternatively, a part of the covering-removed portion 22 and a part of the covered portion 23 may be included in the inserted portion 26. That is, both the covering-removed portion 22 and the covered portion 23 may be inserted into and held in the through hole 11 as the inserted portion 26.

When the optical-fiber coupling structure body 25 is manufactured, the inserted portion 26 of the optical fiber 20, which is rotationally aligned, is fixed inside the through hole 11 by the cured product 60 of the adhesive. In detail, in a state where the inserted portion 26 is inserted into the through hole 11, for example, a liquid adhesive is injected into the inside of the through hole 11 from the opening 11b of the rear surface 10b. The liquid adhesive is filled in a gap between the inner surface of the through hole 11 and the outer surface of the inserted portion 26. In this state, the liquid adhesive is cured by, for example, being irradiated with ultraviolet rays from the outside of the optical-fiber holding component 10. As a result, the optical-fiber coupling structure body 25 in which each optical fiber 20 is held by the optical-fiber holding component 10 is obtained.

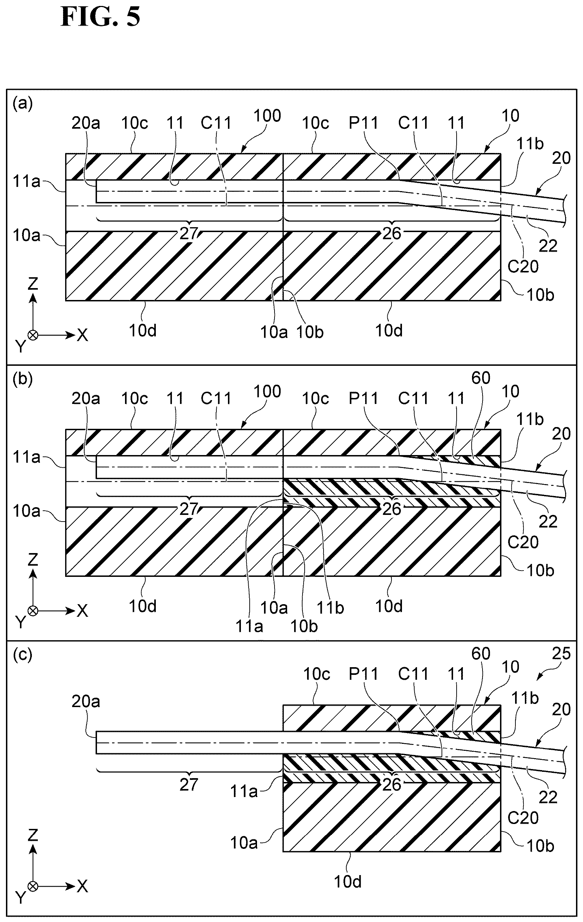

In the manufacturing process of the optical-fiber coupling structure body 25, from the viewpoint of reducing the positional offset of the optical fiber 20 with respect to the optical-fiber holding component 10, another optical-fiber holding component may be further prepared, and the optical-fiber holding component may be used as a jig. Hereinafter, an example of a method of manufacturing the optical-fiber coupling structure body 25 will be described with reference to FIGS. 5 (a) to 5 (c).

FIGS. 5 (a) to 5 (c) are cross-sectional views for explaining an example of a method of manufacturing the optical-fiber coupling structure body 25. In this manufacturing method, first, as illustrated in FIG. 5 (a), an auxiliary optical-fiber holding component 100 is prepared in addition to the fixation optical-fiber holding component 10. The auxiliary optical-fiber holding component 100 has, for example, the same configuration as the fixation optical-fiber holding component 10. The auxiliary optical-fiber holding component 100 is a jig temporarily used to regulate the position of each optical fiber 20 fixed to the fixation optical-fiber holding component 10.

Next, the auxiliary optical-fiber holding component 100 is aligned with the fixation optical-fiber holding component 10 in the X direction. In detail, the rear surface 10b of the auxiliary optical-fiber holding component 100 is brought into contact with the front surface 10a of the fixation optical-fiber holding component 10 in the X direction such that each through hole 11 of the auxiliary optical-fiber holding component 100 is communicated with each through hole 11 of the fixation optical-fiber holding component 10 in the X direction. In this state, for example, the central axis C11 of each through hole 11 of the auxiliary optical-fiber holding component 100 coincides with the central axis C11 of each through hole 11 of the fixation optical-fiber holding component 10 when viewed along the X direction. The rear surface 10b of the auxiliary optical-fiber holding component 100 may be disposed with a gap in the X direction with respect to the front surface 10a of the fixation optical-fiber holding component 10.

Next, the optical fiber 20 is inserted in the X direction from the through hole 11 of the fixation optical-fiber holding component 10 to the through hole 11 of the auxiliary optical-fiber holding component 100. As a result, the inserted portion 26 of the optical fiber 20 is inserted into the through hole 11 of the fixation optical-fiber holding component 10, and the protruding portion 27 of the optical fiber 20 is inserted into the through hole 11 of the auxiliary optical-fiber holding component 100. Here, it is assumed that the optical fiber 20 is inserted into the through hole 11 of the fixation optical-fiber holding component 10 in an inclined state. As a result, the inserted portion 26 extends in a direction inclined from the central axis C11 inside the through hole 11 of the fixation optical-fiber holding component 10 and is in contact with the inner surface of the through hole 11. The inserted portion 26 is bent at a contact position P11 with the inner surface of the through hole 11, and then extends linearly in the X direction along the inner surface of the through hole 11. The protruding portion 27 extends linearly in the X direction along the inner surface of the through hole 11 inside the through hole 11 of the auxiliary optical-fiber holding component 100.

Next, as illustrated in FIG. 5 (b), a liquid adhesive is injected into the through hole 11 of the fixation optical-fiber holding component 10, and the inserted portion 26 is fixed to the inner surface of the through hole 11 by the cured product 60 of the adhesive. At this time, the adhesive is not injected into the through hole 11 of the auxiliary optical-fiber holding component 100, and the protruding portion 27 is not fixed to the inner surface of the through hole 11 of the auxiliary optical-fiber holding component 100. Next, as illustrated in FIG. 5 (c), the optical-fiber coupling structure body 25 in which the optical fiber 20 is held by the fixation optical-fiber holding component 10 is obtained by removing the auxiliary optical-fiber holding component 100.

In this manner, in the manufacturing process of the optical-fiber coupling structure body 25, when the auxiliary optical-fiber holding component 100 is used as a jig for regulating the position of the tip surface 20a of the protruding portion 27 of the optical fiber 20 protruding from the through hole 11 of the fixation optical-fiber holding component 10, the position of the tip surface 20a of the protruding portion 27 is regulated by the inner surface of the through hole 11 of the auxiliary optical-fiber holding component 100, so that the position of the tip surface 20a of the protruding portion 27 can be prevented from being greatly offset outward in the radial direction of the through hole 11.

Furthermore, by aligning the plurality of optical-fiber holding components 10 and 100 in the X direction in this manner, the overall length of the optical-fiber holding components 10 and 100 in the X direction can be increased. As the overall length of the optical-fiber holding components 10 and 100 increases, the inclination that may occur in the inserted portion 26 of the optical fiber 20 inserted into the through hole 11 of the optical-fiber holding components 10 and 100 is reduced. As a result, when the optical fiber 20 held by the fixation optical-fiber holding component 10 is inserted into the inside of the ferrule 30, the protruding portion 27 can be more reliably inserted into the ferrule hole 33 without strongly abutting the tip surface 20a of the optical fiber 20 against the inner surface of the ferrule hole 33 or the like. Thus, a large load applied to the optical fiber 20 can be more reliably reduced, and the reliability of the optical fiber 20 can be increased.

Further, when the auxiliary optical-fiber holding component 100 is brought into contact with the fixation optical-fiber holding component 10 in the X direction such that the through hole 11 of the auxiliary optical-fiber holding component 100 is in communication with the through hole 11 of the fixation optical-fiber holding component 10 in the X direction, the protruding portion 27 of the optical fiber 20 can be easily and reliably inserted into the through hole 11 of the auxiliary optical-fiber holding component 100 when the optical fiber 20 is inserted from the through hole 11 of the fixation optical-fiber holding component 10 into the through hole 11 of the auxiliary optical-fiber holding component 100, as compared with a case where the auxiliary optical-fiber holding component 100 is disposed with a gap from the fixation optical-fiber holding component 10.

In the example illustrated in FIGS. 5 (a) to 5 (c), a case where one auxiliary optical-fiber holding component 100 is used as a jig is illustrated. However, the number of the auxiliary optical-fiber holding components 100 may be two or more. For example, when two auxiliary optical-fiber holding components are used as the jig, the two auxiliary optical-fiber holding components may be aligned in the X direction in front of or behind the fixation optical-fiber holding component 10. Alternatively, two auxiliary optical-fiber holding components may be aligned on both sides in the X direction with the fixation optical-fiber holding component 10 interposed therebetween. In this case, an injection hole for injecting an adhesive may be formed in the upper surface 10c of the fixation optical-fiber holding component 10. The injection hole may extend from the upper surface 10c in the Z direction and be in communication with the through hole 11. In this case, the optical fiber 20 may be fixed to the inner surface of the through hole 11 by an adhesive injected into the through hole 11 through the injection hole from the upper surface 10c.

By aligning the plurality of auxiliary optical-fiber holding components in the X direction, the overall length of the optical-fiber holding components in the X direction can be increased. Thus, the inclination that may occur in the inserted portion 26 of the optical fiber 20 inserted into the through hole 11 of the optical-fiber holding component can be more reduced. As a result, when the optical fiber 20 held by the fixation optical-fiber holding component 10 is inserted into the inside of the ferrule 30, the protruding portion 27 can be more reliably inserted into the ferrule hole 33 without strongly abutting the tip surface 20a of the optical fiber 20 against the inner surface of the ferrule hole 33 or the like.

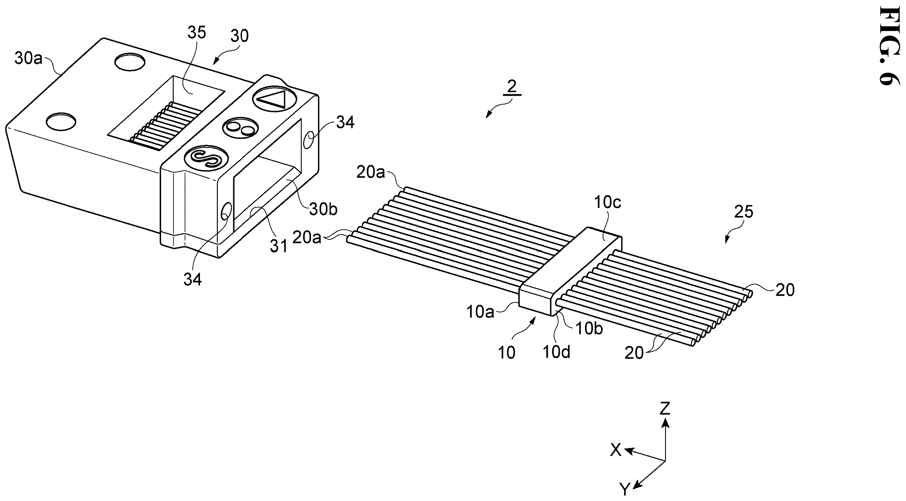

FIG. 6 is an exploded perspective view of an optical connector 2 including the optical-fiber coupling structure body 25 described above. FIG. 7 is a perspective view of the optical connector 2 of FIG. 6. The optical connector 2 includes, for example, the above-described optical-fiber coupling structure body 25 and the ferrule 30. As illustrated in FIGS. 6 and 7, the ferrule 30 has, for example, a substantially rectangular parallelepiped appearance. The optical-fiber coupling structure body 25 is inserted into the inside of the ferrule 30 and fixed to the inside of the ferrule 30. The optical connector 2 may include, for example, two optical-fiber coupling structure bodies 25. In this case, the two optical-fiber coupling structure bodies 25 may be inserted into the ferrule 30 in a state where the two optical-fiber coupling structure bodies 25 are stacked on each other in the Z direction such that the respective upper surfaces 10c thereof face each other, for example.

FIG. 8 (a) is a cross-sectional view of the optical connector 2. FIG. 8 (b) is another cross-sectional view of the optical connector 2. As illustrated in FIGS. 8 (a) and 8 (b), the ferrule 30 has the front surface 30a located at the front end in the X direction and a rear surface 30b located at the rear end in the X direction. The front surface 30a is, for example, a surface that is flush with the tip surface 20a of each optical fiber 20. The rear surface 30b is formed with an opening 31 capable of receiving the optical-fiber coupling structure body 25. Although a pair of guiding holes 34 and 34 are formed in the ferrule 30 in FIGS. 6 and 7, the pair of guiding holes 34 and 34 are omitted in FIG. 8 (b) for convenience. The pair of guiding holes 34 and 34 are holes penetrating the ferrule 30 in the X direction from the front surface 30a to the rear surface 30b.

The ferrule 30 has an accommodation hole 32 and the plurality of ferrule holes 33 therein. The accommodation hole 32 is a hole extending from the opening 31 in the X direction. The accommodation hole 32 holds the optical-fiber coupling structure body 25 introduced from the opening 31. The accommodation hole 32 includes, for example, an inner surface 32a, a pair of inner surfaces 32b and 32b, an inner surface 32c, an inner surface 32d, and an inner surface 32e. The inner surface 32a extends along, for example, the XY plane. The pair of inner surfaces 32b and 32b are, for example, along the XZ plane, and are disposed on both sides of the inner surface 32a in the Y direction. The pair of inner surfaces 32b and 32b are formed, for example, perpendicularly to the inner surface 32a. The inner surface 32c extends along the YZ plane, and extends upward from the inner surface 32a along the Z direction. The inner surface 32c faces the opening 31 in the X direction. The inner surface 32c is formed, for example, perpendicularly to the inner surface 32a.

The inner surface 32d extends along the YZ plane, for example, and is located at a position recessed forward from the inner surface 32c. The inner surface 32d extends, for example, parallel to the inner surface 32c. The inner surface 32e extends along the XY plane so as to connect the inner surface 32c and the inner surface 32d in the X direction. The inner surface 32e is formed with a plurality of V-shaped grooves 32f corresponding to the plurality of ferrule holes 33, respectively.

As illustrated in FIG. 8 (b), the plurality of ferrule holes 33 penetrate from the inner surface 32d to the front surface 30a in the X direction. The plurality of ferrule holes 33 are aligned in a line in the Y direction so as to correspond to the plurality of optical fibers 20 arranged in a line in the Y direction. The protruding portion 27 of each optical fiber 20 extending forward from the optical-fiber coupling structure body 25 is inserted into each ferrule hole 33. An inner diameter D33 of the ferrule hole 33 is, for example, larger than the outer diameter of the protruding portion 27, i.e., the outer diameter D22 of the covering-removed portion 22. As illustrated in FIG. 8 (a), a window 35 for injecting an adhesive is formed in the upper surface of the ferrule 30. Although the cured product of adhesive is omitted in FIGS. 8 (a) and 8 (b), the cured product of adhesive may be the same as the cured product 60 of the adhesive described above.

In a state where the optical-fiber coupling structure body 25 is disposed in the accommodation hole 32, the lower surface 10d of the optical-fiber coupling structure body 25 is in contact with the inner surface 32a. Thus, the position of the optical-fiber coupling structure body 25 in the Z direction with respect to the ferrule 30 is determined. Further, as illustrated in FIG. 8 (b), the side surface 10e and the side surface 10f of the optical-fiber coupling structure body 25 are in contact with the pair of inner surfaces 32b and 32b, respectively. Thus, the position of the optical-fiber coupling structure body 25 in the Y direction with respect to the ferrule 30 is determined.

In a state where the position of the optical-fiber coupling structure body 25 in the YZ plane with respect to the ferrule 30 is determined in this manner, the central axis C11 of each through hole 11 of the optical-fiber holding component 10 coincides with a central axis C33 of each ferrule hole 33 when viewed along the X direction. Further, the front surface 10a of the optical-fiber coupling structure body 25 abuts against the inner surface 32c in the X direction, so that the position of the optical-fiber coupling structure body 25 in the X direction with respect to the ferrule 30 is determined. Then, an adhesive is injected through the window 35, and the optical-fiber coupling structure body 25 is fixed to the ferrule 30 by a cured product of an adhesive. Thus, the optical connector 2 is obtained.

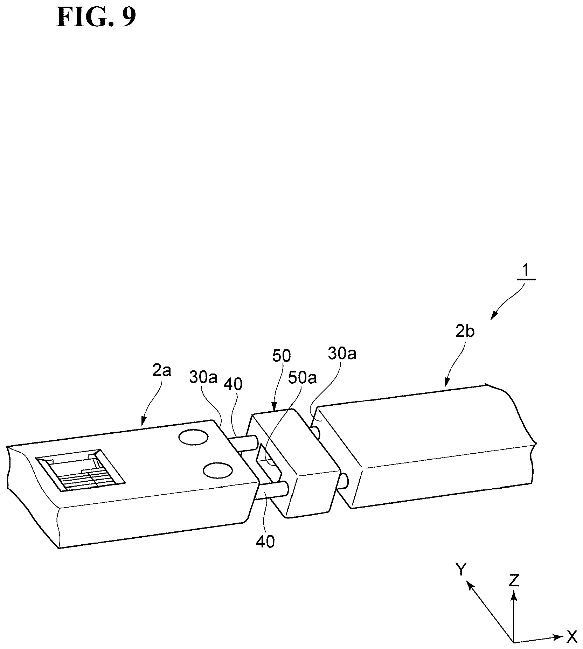

FIG. 9 is a perspective view illustrating an optical coupling structure 1 including a first optical connector 2a and a second optical connector 2b as the optical connector 2. In the optical coupling structure 1, the front surface 30a of the first optical connector 2a and the front surface 30a of the second optical connector 2b face each other in the X direction with a gap therebetween. In this state, a pair of guiding pins 40 and 40 are fitted into the pair of guiding holes 34 and 34 of the first optical connector 2a and the pair of guiding holes 34 and 34 of the second optical connector 2b. Thus, the positions of the first optical connector 2a and the second optical connector 2b in the YZ plane are defined.

A spacer 50 is disposed between the front surface 30a of the first optical connector 2a and the front surface 30a of the second optical connector 2b. The spacer 50 is a plate-like member having an opening 50a. The opening 50a allows a plurality of optical paths extending between the first optical connector 2a and the second optical connector 2b to pass therethrough. The spacer 50 abuts against the front surface 30a of the first optical connector 2a and the front surface 30a of the second optical connector 2b in the X direction, thereby defining a gap between the first optical connector 2a and the second optical connector 2b in the X direction.

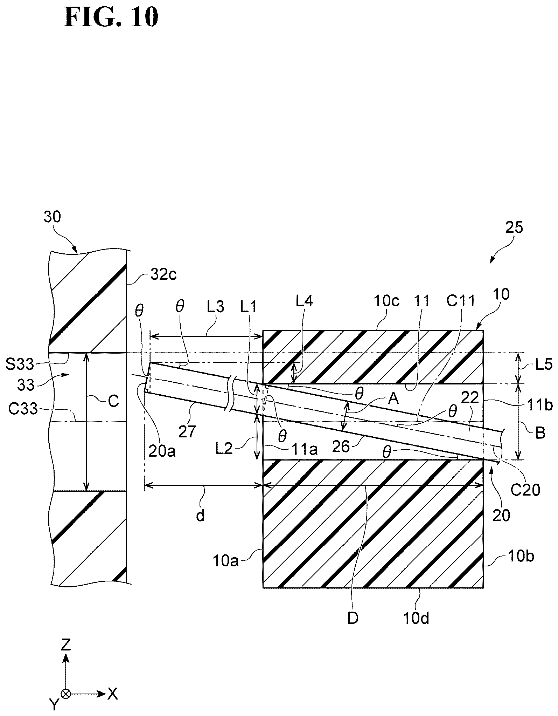

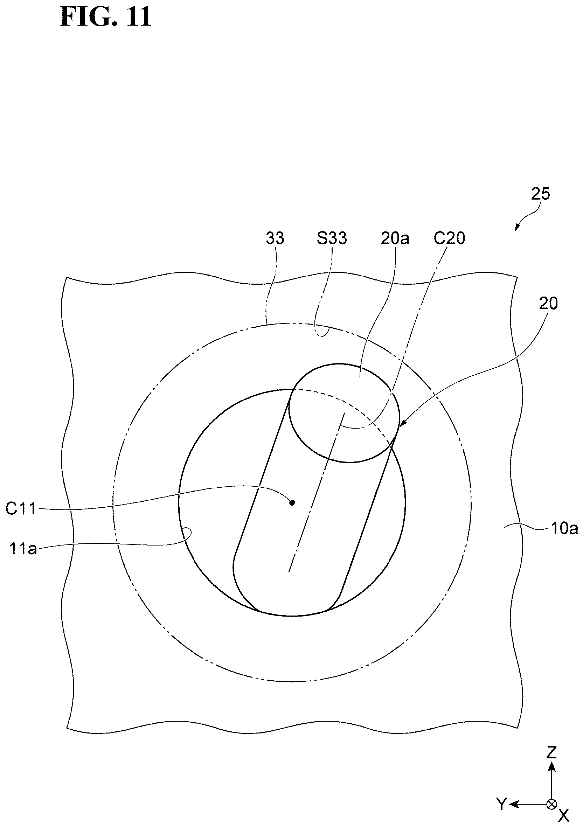

Next, a method of setting the inner diameter D11 of the through hole 11 of the optical-fiber holding component 10 will be described in detail with reference to FIGS. 10 and 11. FIGS. 10 and 11 are diagrams for explaining a method of setting the inner diameter D11 of the through hole 11. In FIGS. 10 and 11, the outer diameter D22 of the covering-removed portion 22 of the optical fiber 20 is denoted by "A", the inner diameter D11 of the through hole 11 is denoted by "B", the inner diameter D33 of the ferrule hole 33 is denoted by "C", the length of the through hole 11 along the X direction, that is, the length L26 of the inserted portion 26 along the X direction is denoted by "D", and the length L27 of the protruding portion 27 along the X direction is denoted by "d".

FIG. 10 illustrates a cross-section of the optical-fiber coupling structure body 25 when the inserted portion 26 of the optical fiber 20 is inclined inside the through hole 11 to the maximum extent in a state where the central axis C11 of the through hole 11 coincides with the central axis C33 of the ferrule hole 33 when viewed along the X direction. The state in which the central axis C11 of the through hole 11 coincides with the central axis C33 of the ferrule hole 33 when viewed along the X direction means a state in which the through hole 11 and the ferrule hole 33 are aligned in the X direction such that an extension line of the central axis C11 coincides with the central axis C33. The state in which the inserted portion 26 is inclined to the maximum extent means a state in which an angle θ formed by the central axis C20 of the inserted portion 26 inserted into the through hole 11 and the central axis C11 of the through hole 11 is maximized. For example, when the inserted portion 26 is in contact with the upper end of the opening 11a and is in contact with the lower end of the opening 11b, the angle θ is maximized.

As illustrated in FIG. 10, an inner diameter B is represented by the sum of a length L1 and a length L2. The length L1 indicates the length in the Z direction of the region occupied by the inserted portion 26 in the region inside the opening 11a. The length L2 indicates the length in the Z direction of the region where the inserted portion 26 does not exist in the region inside the opening 11a. Since the length L1 is geometrically expressed by the following equation (1), the length L2 is expressed by the following equation (2). Thus, the following relation equation (3) is obtained with respect to the angle 0.

[Equation 1]

$$L1 = \frac{A}{\cos\theta} \cdots (1)$$

[Equation 2]

$$L2 = B - \frac{A}{\cos\theta} \cdots (2)$$

[Equation 3]

$$\tan\theta = \frac{1}{D}\left(B - \frac{A}{\cos\theta}\right) \cdots (3)$$

Next, when the distance in the X direction from the front surface 10a to the upper end of the tip surface 20a is denoted by L3, a distance L3 is geometrically expressed by the following equation (4). Thus, when the offset amount of the tip surface 20a from the inner surface of the through hole 11 in the Z direction is denoted by L4, an offset amount L4 is geometrically expressed by the following equation (5). When the offset amount between the inner diameter B and an inner diameter C is denoted by L5, an offset amount L5 is expressed by the following equation (6). In order to insert the optical fiber 20 into the ferrule hole 33 such that the tip surface 20a is not in contact with an inner surface S33 of the ferrule hole 33, the offset amount L4 of the tip surface 20a may be smaller than the offset amount L5. Thus, the offset amount L5 indicates an allowable range of the offset amount L4 for preventing the tip surface 20a from being in contact with the inner surface S33 of the ferrule hole 33. That is, the condition for inserting the optical fiber 20 into the ferrule hole 33 without bringing the tip surface 20a into contact with the inner surface S33 of the ferrule hole 33 is L4 < L5. When this condition is expressed using the equations (5) and (6), the following equation (7) is obtained.

[Equation 4]

$$L3 = d - A \sin \theta \ \cdots \ (4)$$

[Equation 5]

$$L4 = \left(d - A \sin \theta\right) \tan \theta \ \cdots \ (5)$$

[Equation 6]

$$L5 = \frac{C - B}{2} \cdots \ (6)$$

[Equation 7]

$$\left(d - A \sin \theta\right) \tan \theta < \frac{C - B}{2} \cdots \ (7)$$

When the equation (3) is substituted into the above equation (7), the condition to be satisfied by the inner diameter B is expressed by the following equation (8). By setting the upper limit of the inner diameter B in this manner, the optical fiber 20 can be inserted into the ferrule hole 33 without bringing the tip surface 20a into contact with the inner surface S33 of the ferrule hole 33. When the inner diameter B is not constant at each position of the through hole 11 along the X direction, the maximum value of the inner diameter B may satisfy the upper limit of the inner diameter B expressed by the equation (8). The maximum value of the inner diameter B may be smaller than the maximum value of the inner diameter C, for example. For example, when the ferrule hole 33 has a diameter-increasing portion that increases in diameter as it approaches the inner surface 32c, the inner diameter of the opening of the ferrule hole 33 at the inner surface 32c is maximized. Thus, the maximum value of the inner diameter C in this case is the inner diameter of the opening of the ferrule hole 33 in the inner surface 32c. Regarding an outer diameter A in the equation (7), when the outer diameter A is not constant at each position of the covering-removed portion 22 along the X direction, the maximum value of the outer diameter A may satisfy the condition of the lower limit of the inner diameter B expressed by the equation (8). That is, it is sufficient that the minimum value of the inner diameter B is larger than the maximum value of the outer diameter A.

[Equation 8]

$$A < B < \frac{1}{2d - 2A \sin \theta + D} \left( CD + \frac{2dA}{\cos \theta} - \frac{2A^2 \sin \theta}{\cos \theta} \right) \cdots \ (8)$$

As an example, when the outer diameter A is 125 $\mu$m, the inner diameter C is 200 $\mu$m, a length D is 1.5 mm, and a length d is 6.5 mm, substituting these numerical values into the equation (8) obtains a relation equation of 125 $\mu$m < B < 132.8 $\mu$m. However, the angle $\theta$ is regarded as being as small as possible, sin $\theta$ approximates to sin $\theta \approx 0$, and cos $\theta$ approximates to cos $\theta \approx 1$. For example, when the inner diameter B is 130 $\mu$m, the inventors of the present invention have confirmed that the optical fiber 20 can be inserted into the ferrule hole 33 without bringing the tip surface 20a into contact with the inner surface S33 of the ferrule hole 33. Thus, the maximum value of the inner diameter B may be, for example, less than 132.8 $\mu$m.

When the inner diameter B satisfying the condition of the equation (7) is set, the position of the tip surface 20a can be restricted such that the tip surface 20a is not in contact with the inner surface S33 of the ferrule hole 33. As a result, as illustrated in FIG. 11, when viewed along the X direction, the tip surface 20a is located inside the inner surface S33 of the ferrule hole 33. FIG. 11 illustrates a front view of the front surface 10a of the optical-fiber coupling structure body 25 of FIG. 10. In FIG. 11, the inner surface S33 of the ferrule hole 33 is illustrated by a two-dot chain line. The tip surface 20a being located inside the inner surface S33 when viewed along the X direction means that the entire tip surface 20a is within the region inside the inner surface S33 when viewed along the X direction. When viewed along the X direction, the tip surface 20a may be away from the inner surface S33 without overlapping the inner surface S33.

The relationship between the inner diameter B and the length d expressed by the above equation (8) can be explained as follows. For example, when the length d of the protruding portion 27 is relatively short (that is, when the optical-fiber holding component 10 is disposed near the ferrule hole 33), the inclination of the protruding portion 27 is reduced, and thus the inner diameter B can be further increased. In a case where the inner diameter B can be increased, the protruding portion 27 can be more easily inserted into the ferrule hole 33 without strongly abutting the tip surface 20a of the optical fiber 20 against the inner surface S33 of the ferrule hole 33 or the like. Further, when the inner diameter B is large, it is possible to loosen the manufacturing accuracy of the through hole 11 of the optical-fiber holding component 10. On the other hand, when the length d of the protruding portion 27 is relatively long (that is, when the optical-fiber holding component 10 is disposed at a position far from the ferrule hole 33), the inclination of the protruding portion 27 is increased, and thus the inner diameter B is required to be small. However, as the length d of the protruding portion 27 is increased, it is possible to disperse the bending stress applied to the protruding portion 27 when the optical fiber 20 is inserted into the through hole 11.

A specific numerical example of the relationship between the inner diameter B and the length d is shown below. In the following example, the outer diameter A = 125 $\mu$m, the inner diameter C = 200 $\mu$m, the length D = 1.5 mm, $\sin \theta \approx 0$, and $\cos \theta \approx 1$. The overall length of the ferrule 30 is 8 mm, and the overall length of the ferrule hole 33 is 1 mm. In this condition, when the length d = 1 mm, the optical-fiber holding component 10 is adjacent to the ferrule hole 33, and the length d of the protruding portion 27 is equal to the overall length of the ferrule hole 33. In this case, when the equation (8) is used, the upper limit of the maximum value of the inner diameter B can be derived as 157.1 $\mu$m. When the length d of the protruding portion 27 is shortened in this manner, as described above, it is possible to effectively obtain the effect of reducing the risk that the optical fiber 20 comes into contact with the inner surface S33 of the ferrule hole 33 when the optical-fiber holding component 10 is inserted inside the ferrule 30 and the effect of loosening the manufacturing accuracy of the through hole 11 of the optical-fiber holding component 10.

Next, in the above condition, when the length d = 6.5 mm, the optical-fiber holding component 10 is disposed at a position farthest from the ferrule hole 33 inside the ferrule 30. In this case, when the equation (8) is used, 132.8 $\mu$m can be derived as the upper limit of the maximum value of the inner diameter B. When the length d of the protruding portion 27 is increased as described above, the effect of dispersing the bending stress applied to the protruding portion 27 when the optical fiber 20 is inserted into the through hole 11 can be significantly obtained. Next, in the above condition, when the length d = 4 mm, the optical-fiber holding component 10 is disposed at the center of the inside of the ferrule 30. In this case, when the equation (8) is used, the upper limit of the maximum value of the inner diameter B can be derived as 136.8 $\mu$m. When the length d of the protruding portion 27 is set as described above, it is possible to effectively obtain the effect of reducing the risk that the optical fiber 20 comes into contact with the inner surface S33 of the ferrule hole 33 when the optical-fiber holding component 10 is inserted into the inside of the ferrule 30, the effect of loosening the manufacturing accuracy of the through hole 11 of the optical-fiber holding component 10, and the effect of dispersing bending stress on the protruding portion 27 when the optical fiber 20 is inserted into the through hole 11. Based on the above, the maximum value of the inner diameter B may be, for example, smaller than 157.1 $\mu$m, smaller than 136.8 $\mu$m, or smaller than 132.8 $\mu$m.

The effects obtained by the optical-fiber holding component 10, the optical-fiber coupling structure body 25, the optical connector 2, the optical coupling structure 1, and the method of manufacturing the optical-fiber coupling structure body 25 according to the embodiment described above will be described together with the problems of a comparative example.

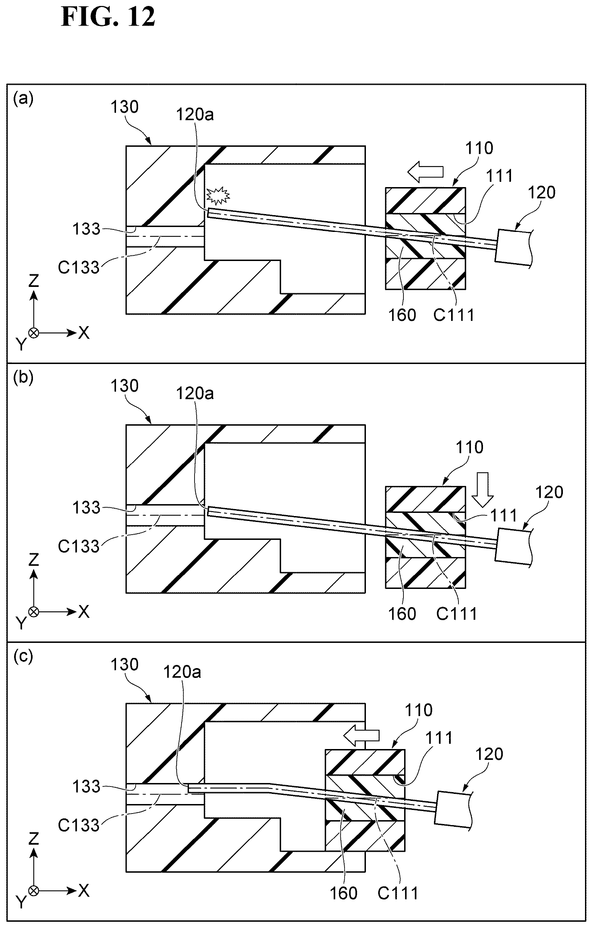

FIGS. 12 (a) to 12 (c) are diagrams for explaining a problem of an optical-fiber holding component 110 according to the comparative example. The optical-fiber holding component 110 has a through hole 111 for holding an optical fiber 120. As illustrated in FIG. 12 (a), when the inner diameter of the through hole 111 is set to be relatively large, the optical fiber 120 may be inserted into the through hole 111 in a greatly inclined state, and in this state, the optical fiber 120 may be fixed to the inner surface of the through hole 111 by a cured product 160 of an adhesive. As a result, a tip surface 120a of the optical fiber 120 may be greatly offset to the outside of the through hole 111. In this case, even when the position of the optical-fiber holding component 110 with respect to a ferrule 130 is adjusted such that a central axis C111 of the through hole 111 and a central axis C133 of a ferrule hole 133 coincide with each other when viewed along the X direction, it is assumed that the tip surface 120a abuts against the wall surface around the ferrule hole 133 when the optical-fiber holding component 110 is inserted into the inside of the ferrule 130.

Thus, as illustrated in FIG. 12 (b), after the optical-fiber holding component 110 is shifted in the Z direction with respect to the ferrule 130 to a position where the tip surface 120a does not abut against the wall surface around the ferrule hole 133, as illustrated in FIG. 12 (c), the optical fiber 120 may be forcibly inserted into the ferrule hole 133 while being pressed against the inner surface of the ferrule hole 133. However, in this case, the optical fiber 120 may be in strong contact with the inner surface of the ferrule hole 133, and thus a large load may be applied to the optical fiber 120. Such a load may cause a problem such as damage to the optical fiber 120 or deterioration of optical transmission characteristics, and thus may cause a decrease in the reliability of the optical fiber 120.

In contrast, in the embodiment, as illustrated in FIGS. 10 and 11, when the central axis C20 of the inserted portion 26 of the optical fiber 20 is inclined inside the through hole 11 to the maximum extent with respect to the central axis C11 of the through hole 11 in a state where the central axis C11 of the through hole 11 coincides with the central axis C33 of the ferrule hole 33 when viewed along the X direction, the tip surface 20a of the protruding portion 27 is located inside the inner surface S33 of the ferrule hole 33 when viewed along the X direction. In this case, regardless of the angle at which the inserted portion 26 is inclined inside the through hole 11, when the optical-fiber holding component 10 is inserted inside the ferrule 30, the protruding portion 27 can be reliably inserted into the ferrule hole 33 without the tip surface 20a strongly abutting against the inner surface S33 of the ferrule hole 33 or the inner surface 32d around the ferrule hole 33. Thus, a large load applied to the optical fiber 20 can be reduced. As a result, it is possible to reduce the occurrence of problems such as damage to the optical fiber 20 or deterioration of the optical transmission characteristics. Thus, according to the embodiment, it is possible to improve the reliability of the optical fiber 20.

As in the embodiment, the maximum value of the inner diameter D11 of the through hole 11 may be smaller than the maximum value of the inner diameter D33 of the ferrule hole 33. By reducing the maximum value of the inner diameter D11 of the through hole 11 in this manner, the inclination of the inserted portion 26 inside the through hole 11 can be reduced. Thus, the offset of the tip surface 20a of the protruding portion 27 from the through hole 11 can be reduced. As a result, when the optical-fiber holding component 10 is inserted into the inside of the ferrule 30, the protruding portion 27 can be more reliably inserted into the ferrule hole 33 without strongly abutting the tip surface 20a against the inner surface S33 of the ferrule hole 33 or the like.

As in the embodiment, only the covering-removed portion 22 may be inserted into the through hole 11 as the inserted portion 26. In this case, the maximum value of the inner diameter D11 of the through hole 11 can be reduced in accordance with the outer diameter D22 of the covering-removed portion 22, and thus the inclination of the inserted portion 26 inside the through hole 11 can be reduced. Thus, the offset of the tip surface 20a of the protruding portion 27 from the through hole 11 can be reduced. As a result, when the optical-fiber holding component 10 is inserted into the inside of the ferrule 30, the protruding portion 27 can be more reliably inserted into the ferrule hole 33 without strongly abutting the tip surface 20a against the inner surface S33 of the ferrule hole 33 or the like.

As in the embodiment, the optical fiber 20 may include at least one core 14a in a region offset from the central axis C20 of the optical fiber 20. The through hole 11 may be configured to hold the inserted portion 26 such that the inserted portion 26 is rotatable about the central axis C20 of the inserted portion 26. In this case, the rotational position of the inserted portion 26 of the optical fiber 20 can be adjusted. During this adjustment, the inserted portion 26 of the optical fiber 20 is likely to be inclined. Thus, the above configuration can effectively achieve the above-described effects.

The optical-fiber holding component, the optical-fiber coupling structure body, the optical connector, the optical coupling structure, and the method of manufacturing the optical-fiber coupling structure body of the present disclosure are not limited to the above-described embodiments, and can be appropriately modified without departing from the spirit described in the claims.

[Modification 1]

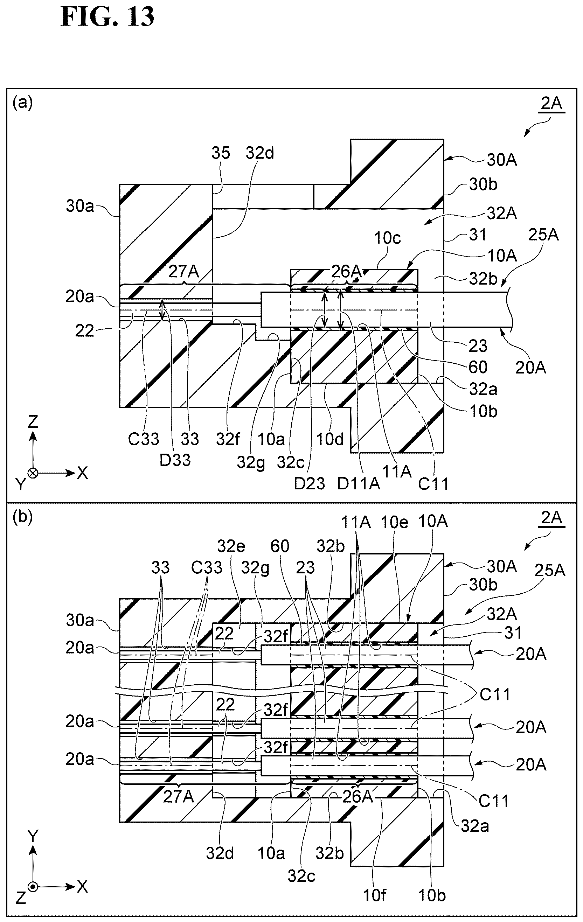

FIG. 13 (a) is a cross-sectional view of an optical connector 2A according to a modification 1. FIG. 13 (b) is another cross-sectional view of the optical connector 2A. The optical connector 2A is different from the optical connector 2 in that only the covered portion 23 of the optical fiber 20 is inserted into a through hole 11A of an optical-fiber holding component 10A as an inserted portion 26A. As illustrated in FIG. 13 (a), an inner diameter D11A of the through hole 11A is set to be larger than an outer diameter D23 of the covered portion 23. The end portions of the covering-removed portion 22 and the covered portion 23 protrude from the through hole 11A to the outside as a protruding portion 27A. An accommodation hole 32A of a ferrule 30A further includes an inner surface 32g in addition to the configuration of the accommodation hole 32 described above. The inner surface 32g is disposed between the inner surface 32e and the inner surface 32a in the X direction, and extends along the XY plane. The inner surface 32g forms a step recessed in the Z direction with respect to the inner surface 32e. The inner surface 32g faces the end of the covered portion 23 included in the protruding portion 27A in the Z direction.

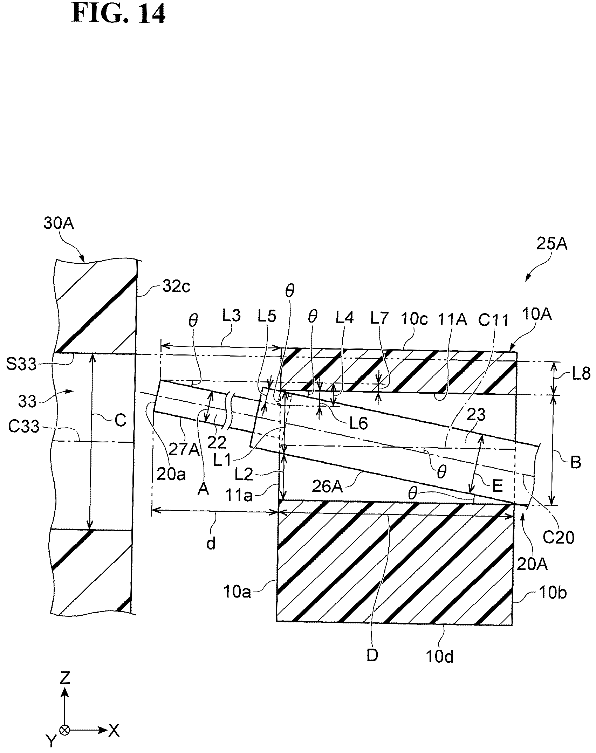

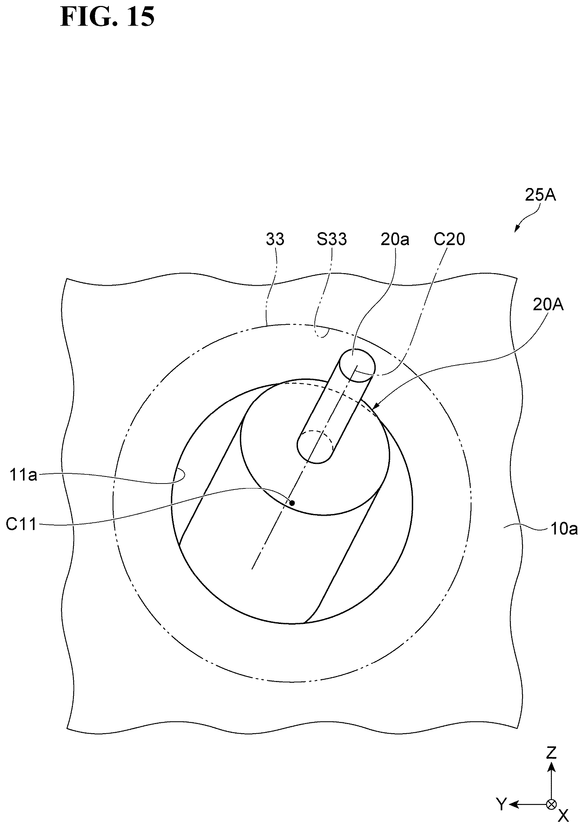

FIGS. 14 and 15 are diagrams for explaining a method of setting the inner diameter D11A of the through hole 11A. In FIGS. 14 and 15, the outer diameter D22 of the covering-removed portion 22 of the optical fiber 20 is denoted by "A", the inner diameter D11A of the through hole 11A is denoted by "B", the inner diameter D33 of the ferrule hole 33 is denoted by "C", the length of the through hole 11A along the X direction, that is, the length L26 of the inserted portion 26A along the X direction is denoted by "D", the length L27 of the protruding portion 27A along the X direction is denoted by "d", and the outer diameter D23 of the covered portion 23 of the optical fiber 20 is denoted by "E".

FIG. 14 illustrates a cross-section of an optical-fiber coupling structure body 25A when the inserted portion 26A of the optical fiber 20 is inclined inside the through hole 11A to the maximum extent in a state where the central axis C11 of the through hole 11A coincides with the central axis C33 of the ferrule hole 33 when viewed along the X direction. As illustrated in FIG. 14, the inner diameter B is expressed by the sum of the length L1 and the length L2. Since the length L1 and the length L2 are expressed by the above-described equation (1) and equation (2), respectively, the relation equation of the above-described equation (3) is obtained with respect to the angle θ. When the distance in the X direction from the front surface 10a to the upper end of the tip surface 20a is denoted by L3, the distance L3 is expressed by the above-described equation (4). When the offset amount of the tip surface 20a from the inner surface of the through hole 11A in the Z direction is expressed by L4, the offset amount L4 is expressed by the above-described equation (5).

Next, when the offset amount between an outer diameter E of the covered portion 23 and the outer diameter A of the covering-removed portion 22 is expressed by L5, the offset amount L5 is expressed by the following equation (9), and thus a length L6 is geometrically expressed by the following equation (10). Next, when the offset amount of the tip surface 20a from the inner surface of the through hole 11A in the Z direction is expressed by L7, an offset amount L7 is obtained by subtracting the length L6 from the offset amount L4, and thus the following equation (11) is obtained. When the offset amount between the inner diameter B and the inner diameter C is expressed by L8, an offset amount L8 is expressed by the following equation (12).

[Equation 9]

$$L5 = \frac{E - A}{2} \cdots (9)$$

[Equation 10]

$$L6 = \frac{E - A}{2\cos\theta} \cdots (10)$$

[Equation 11]

$$L7 = (d - A\sin\theta)\tan\theta - \frac{E - A}{2\cos\theta} \cdots (11)$$

[Equation 12]

$$L8 = \frac{C - B}{2} \cdots (12)$$

In order to insert the optical fiber 20 into the ferrule hole 33 such that the tip surface 20a is not in contact with the inner surface S33 of the ferrule hole 33, the offset amount L7 of the tip surface 20a may be smaller than the offset amount L8. Thus, the offset amount L8 indicates an allowable range of the offset amount L7 for preventing the tip surface 20a from being in contact with the inner surface S33 of the ferrule hole 33. The condition for inserting the optical fiber 20 into the ferrule hole 33 without bringing the tip surface 20a into contact with the inner surface S33 of the ferrule hole 33 is L7 < L8. When this condition is expressed using equations (11) and (12), the following equation (13) is obtained.

[Equation 13]

$$(d - A\sin\theta)\tan\theta - \frac{E - A}{2\cos\theta} < \frac{C - B}{2} \cdots (13)$$

When the equation (3) is substituted into the above equation (13), the condition to be satisfied by the inner diameter B is expressed by the following equation (14). By setting the upper limit of the inner diameter B in this manner, the optical fiber 20 can be inserted into the ferrule hole 33 without bringing the tip surface 20a into contact with the inner surface S33 of the ferrule hole 33. When the inner diameter B is not constant at each position of the through hole 11A along the X direction, the maximum value of the inner diameter B may satisfy the condition of the upper limit of the inner diameter B expressed by the equation (14). The maximum value of the inner diameter B may be, for example, less than 216.6 μm. Regarding the outer diameter E in the equation (14), when the outer diameter E is not constant at each position of the covered portion 23 along the X direction, the maximum value of the outer diameter E may satisfy the condition of the lower limit of the inner diameter B expressed by the equation (14). That is, the minimum value of the inner diameter B may be equal to or larger than the maximum value of the outer diameter E. In the case where only the covered portion 23 is inserted into the through hole 11A as in the present modification, even when the covered portion 23 is in contact with the inner surface of the through hole 11A, a large load is hardly applied to the optical fiber 20. Thus, the minimum value of the inner diameter B may be the same as the maximum value of the outer diameter E.

[Equation 14]

$$E \leq B < \frac{1}{2d - 2A\sin\theta + D}\left(CD + \frac{2dE}{\cos\theta} - \frac{2AE\sin\theta}{\cos\theta} + \frac{D(E-A)}{\cos\theta}\right) \cdots (14)$$

When the inner diameter B satisfying the condition of the equation (14) is set, the position of the tip surface 20a can be restricted such that the tip surface 20a is not in contact with the inner surface S33 of the ferrule hole 33. As a result, as illustrated in FIG. 15, when viewed along the X direction, the tip surface 20a is located inside the inner surface S33 of the ferrule hole 33. FIG. 15 illustrates a front view of the front surface 10a of the optical-fiber coupling structure body 25A of FIG. 14. In FIG. 15, the inner surface S33 of the ferrule hole 33 is illustrated by a two-dot chain line. The tip surface 20a being located inside the inner surface S33 when viewed along the X direction means that the entire tip surface 20a is within the region inside the inner surface S33 when viewed along the X direction. When viewed along the X direction, the tip surface 20a may be away from the inner surface S33 without overlapping the inner surface S33.

A specific numerical example of the relationship between the inner diameter B and the length d is shown below. In the following example, the outer diameter A = 125 μm, the inner diameter C = 230 μm, the length D = 1.5 mm, the outer diameter E = 200 μm, sin θ ≈ 0, and cos θ ≈ 1. The overall length of the ferrule 30A is 8 mm, and the overall length of the ferrule hole 33 is 1 mm. In this condition, when the length d = 6.5 mm, the optical-fiber holding component 10A is disposed at a position farthest from the ferrule hole 33 on the inside of the ferrule 30A. In this case, when the equation (14) is used, the upper limit of the maximum value of the inner diameter B can be derived as 210.9 μm. When the length d of the protruding portion 27A is increased as described above, the effect of dispersing the bending stress applied to the protruding portion 27A when the optical fiber 20 is inserted into the through hole 11A can be significantly obtained.

Next, in the above condition, when the length d = 4 mm, the optical-fiber holding component 10A is disposed at the center of the inside of the ferrule 30A. In this case, when the equation (14) is used, the upper limit of the maximum value of the inner diameter B can be derived as 216.6 μm. When the length d of the protruding portion 27A is set in this manner, it is possible to effectively obtain an effect of reducing a risk of contact of the optical fiber 20 with the inner surface S33 of the ferrule hole 33 when the optical-fiber holding component 10A is inserted inside the ferrule 30A, an effect of relaxing the manufacturing accuracy of the through hole 11A of the optical-fiber holding component 10A, and an effect of dispersing bending stress on the protruding portion 27A when the optical fiber 20 is inserted into the through hole 11A. Based on the above, the maximum value of the inner diameter B may be, for example, smaller than 210.9 μm or smaller than 216.6 μm.

Even in such a form, the similar effects as those of the above-described embodiment can be achieved. Further, in this modification, only the covered portion 23 is inserted into the through hole 11A as the inserted portion 26A. In this case, the maximum value of the inner diameter D11A of the through hole 11A is set to be large in accordance with the outer diameter D23 of the covered portion 23. Thus, the allowable range of the offset of the tip surface 20a from the through hole 11A is reduced for preventing the tip surface 20a of the protruding portion 27A from coming into contact with the inner surface of the ferrule hole 33. As is clear from the above equation (12), it is understood that the offset amount L8, which is the allowable range of the offset amount L7, becomes smaller as the inner diameter B becomes larger. As a result, when the protruding portion 27A is inserted into the ferrule hole 33, the tip surface 20a is likely to abut against the inner surface S33 of the ferrule hole 33. In contrast, according to the present modification, even when the inserted portion 26A is inclined at any angle inside the through hole 11A, the protruding portion 27A can be reliably inserted into the ferrule hole 33 without strongly abutting the tip surface 20a against the inner surface S33 of the ferrule hole 33 or the like, and thus, a large load applied to the optical fiber 20 can be more effectively reduced.

[Modification 2]

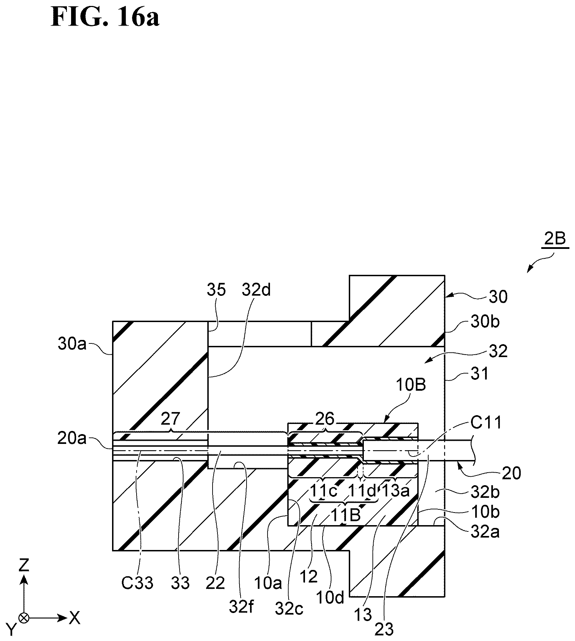

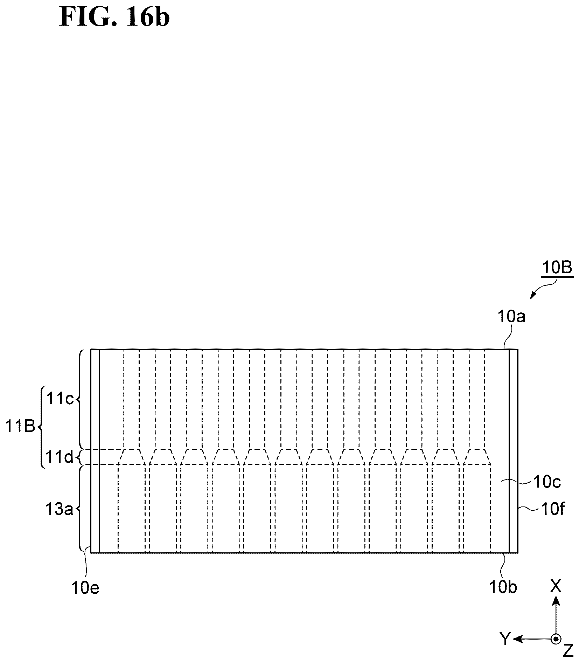

FIG. 16a is a cross-sectional view of an optical connector 2B according to a modification 2. FIG. 16b is a plan view of an optical-fiber holding component 10B included in the optical connector 2B. The optical connector 2B is different from the optical connector 2 in the configuration of the optical-fiber holding component 10B. As illustrated in FIGS. 16a and 16b, the optical-fiber holding component 10B includes a support portion 12 supporting the covering-removed portion 22 of the plurality of optical fibers 20 and a support portion 13 supporting the covered portion 23 of the plurality of optical fibers 20.

The support portion 12 includes a plurality of through holes 11B into which the covering-removed portions 22 of the plurality of optical fibers 20 are respectively inserted as the inserted portions 26. Each through hole 11B includes, for example, a constant-diameter portion 11c and a diameter-increasing portion 11d. The constant-diameter portion 11c extends linearly in the X direction from the front surface 10a toward the rear surface 10b. The inner diameter of the constant-diameter portion 11c is constant at each position along the X direction of the constant-diameter portion 11c. The diameter-increasing portion 11d extends linearly in the X direction from the constant-diameter portion 11c to the support portion 13. The inner diameter of the diameter-increasing portion 11d is set to gradually increase from the constant-diameter portion 11c toward the support portion 13 in the X direction.

The constant-diameter portion 11c has an inner diameter into which the covering-removed portion 22 of the optical fiber 20 can be inserted. The constant-diameter portion 11c is configured to hold the covering-removed portion 22 such that the covering-removed portion 22 is rotatable about the central axis C20 of the optical fiber 20. The constant-diameter portion 11c being configured to hold the covering-removed portion 22 such that the covering-removed portion 22 is rotatable around the central axis C20 means that the inner diameter of the constant-diameter portion 11c is set to be large enough to allow the rotation of the covering-removed portion 22 about the central axis C20 and small enough to define the position of the covering-removed portion 22 in the YZ plane.

The support portion 13 is disposed between the support portion 12 in which the plurality of through holes 11B are formed and the rear surface 10b in the X direction. The support portion 13 supports the covered portion 23 of the optical fiber 20 disposed outside the through hole 11B. The support portion 13 includes, for example, a plurality of fixing hole 13a penetrating from the rear surface 10b in the X direction and being in communication with the plurality of through holes 11B, respectively. Each fixing hole 13a extends linearly in the X direction from the rear surface 10b toward the constant-diameter portion 11c. The fixing hole 13a has an inner diameter into which the covered portion 23 of the optical fiber 20 can be inserted. The fixing hole 13a is configured to hold the covered portion 23 such that the covered portion 23 is rotatable about the central axis C20. Thus, the inner diameter of the fixing hole 13a is set to be large enough to allow the rotation of the covered portion 23 about the central axis C20 and small enough to define the position of the covered portion 23 in the YZ plane. The inner diameter of the fixing hole 13a is constant at each position along the X direction. The inner diameter of the fixing hole 13a may be equal to or greater than the outer diameter of the covered portion 23.

Even in such a form, the same effects as those of the above-described embodiment can be achieved. Further, in this modification, the optical-fiber holding component 10B includes the support portion 13 capable of supporting the covered portion 23. In this case, the covered portion 23 of the optical fiber 20 is supported by the support portion 13 of the optical-fiber holding component 10B, so that the inclination of the inserted portion 26 inside the through hole 11B can be reduced. Thus, the offset of the tip surface 20a of the protruding portion 27 from the through hole 11B can be reduced. As a result, when the optical-fiber holding component 10B is inserted into the inside of the ferrule 30, the protruding portion 27 can be more reliably inserted into the ferrule hole 33 without strongly abutting the tip surface 20a against the inner surface S33 of the ferrule hole 33 or the like.

In this modification, the through hole 11B includes the constant-diameter portion 11c and the diameter-increasing portion 11d. In this case, when the optical fiber 20 is inserted into the through hole 11B, the tip surface 20a of the optical fiber 20 is guided to the constant-diameter portion 11c by the diameter-increasing portion 11d, so that it is possible to reduce the possibility that the tip surface 20a of the optical fiber 20 comes into strong contact with the inner surface of the through hole 11B. Thus, a large load applied to the optical fiber 20 can be more reliably reduced.

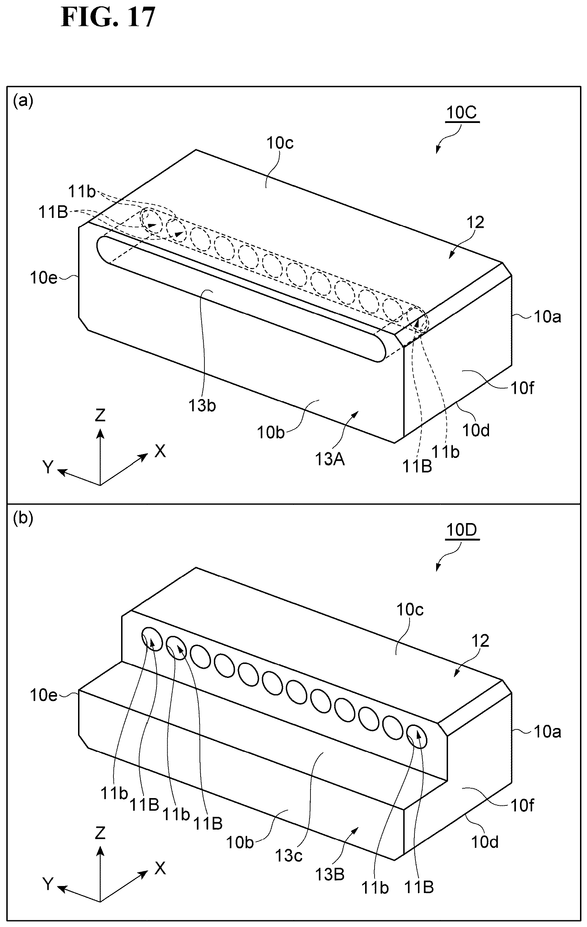

FIG. 17 (a) is a perspective view of an optical-fiber holding component 10C, which is another example of the optical-fiber holding component 10B. As illustrated in FIG. 17 (a), the optical-fiber holding component 10C includes a support portion 13A including one fixing hole 13a instead of the support portion 13 including a plurality of fixing holes 13b. The fixing hole 13b has an oval shape that encompasses all the through holes 11B when viewed along the X direction. The fixing hole 13b is in communication with the plurality of through holes 11B in the X direction. The covered portion 23 of the optical fiber 20 is inserted into the fixing hole 13b.

FIG. 17 (b) is a perspective view of an optical-fiber holding component 10D, which is still another example of the optical-fiber holding component 10B. As illustrated in FIG. 17 (b), the optical-fiber holding component 10D includes a support portion 13B including a support surface 13c instead of the support portion 13 including the plurality of fixing holes 13a. The support surface 13c is, for example, a plane along the XY plane, and forms a step with respect to the upper surface 10c. The support surface 13c is disposed at a position offset from the through hole 11B toward the lower surface 10d in the Z direction. The support surface 13c supports the covered portion 23 disposed outside the through hole 11B in the Z direction. The forms illustrated in FIGS. 17 (a) and 17 (b) also provide the same effects as those of the optical-fiber holding component 10B described above.

[Modification 3]

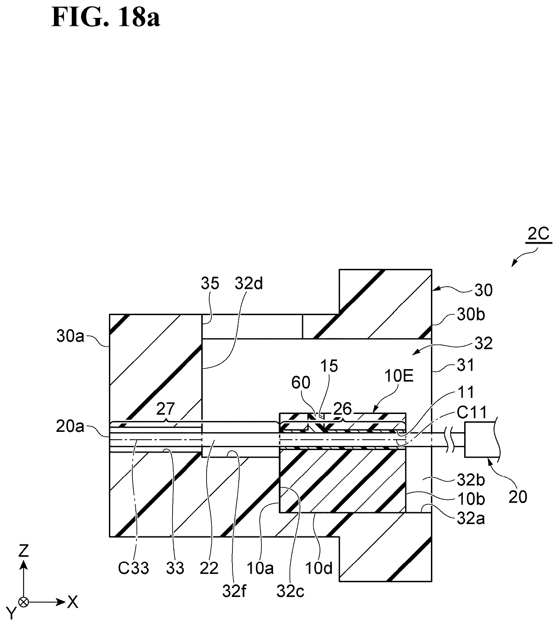

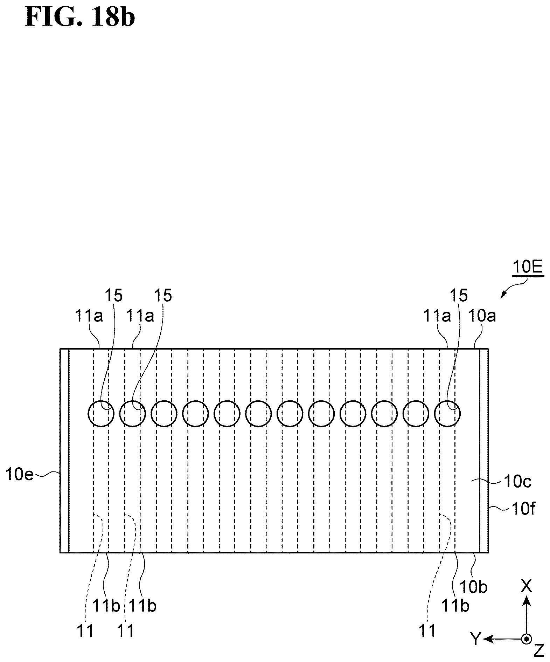

FIG. 18a is a cross-sectional view of an optical connector 2C according to a modification 3. FIG. 18b is a plan view of an optical-fiber holding component 10E included in the optical connector 2C. The optical connector 2C is different from the optical connector 2 described above in that the optical-fiber holding component 10E includes a plurality of injection holes 15. As illustrated in FIG. 18a, each injection hole 15 is a hole extending from the upper surface 10c in the Z direction. As illustrated in FIG. 18b, the injection holes 15 are arranged in a line in the Y direction corresponding to the through holes 11. Each injection hole 15 has, for example, a circular shape when viewed along the Z direction, and is disposed so as to overlap the through hole 11 in the Z direction. Each injection hole 15 penetrates, for example, linearly in the Z direction from the upper surface 10c to each through hole 11, and is in communication individually with a corresponding one of the through holes 11. The expression "each injection hole 15 is in communication individually with a corresponding one of the through holes 11" means that one injection hole 15 is connected to one through hole 11, and means that one injection hole 15 is not connected to two or more through holes 11. Thus, each injection hole 15 is independently provided for the corresponding one of the through holes 11, and the adhesive injected into one injection hole 15 is introduced into only one through hole 11 connected to one injection hole 15.

The inner diameter of the injection hole 15 has a size that allows the liquid adhesive injected from the upper surface 10c to be introduced into the through hole 11. The size that allows the liquid adhesive to be introduced into the through hole 11 means a size that allows the liquid adhesive to flow through the injection hole 15 and reach the through hole 11. The inner diameter of the injection hole 15 is set to be smaller than the pitch of the through holes 11. The inner diameter of the injection hole 15 may be smaller than the inner diameter of the through hole 11 or may be larger than the inner diameter of the through hole 11 as long as the adhesive can be introduced into the through hole 11. The inner diameter of the injection hole 15 may be identical to the inner diameter of the through hole 11.

Even in such a form, the same effects as those of the above-described embodiment can be achieved. Further, according to the optical-fiber holding component 10E including the plurality of injection holes 15, when the optical fiber 20 is fixed to the through hole 11 using an adhesive, the adhesive can be individually injected into the through hole 11 from a path different from the through hole 11. By adjusting the position of the injection hole 15 with respect to the through hole 11, the amount of the adhesive to be injected, and the like in consideration of the fluidity of the adhesive, the adhesive can be reliably filled between the optical fiber 20 and the through hole 11 without a gap. Thus, since the adhesive can be evenly distributed around the optical fiber 20, the stress generated when the adhesive is cured can be uniformly applied to the optical fiber 20. As a result, it is possible to reduce the occurrence of inclination of the optical fiber 20 due to the stress received in one direction. Thus, in the above configuration, since it is possible to more reliably reduce the occurrence of inclination of the inserted portion 26 of the optical fiber 20 inside the through hole 11, the tip surface 20a of the optical fiber 20 being in strong contact with the inner surface S33 of the ferrule hole 33 or the like can be more reliably avoided when the optical fiber 20 is inserted into the ferrule hole 33. As a result, a large load applied to the optical fiber 20 can be more reliably reduced.

The present disclosure is not limited to the above-described embodiments and modifications, and various other modifications are possible. For example, the above-described embodiments and modifications may be combined with each other within a range in which no contradiction occurs, depending on a necessary purpose and effect. The configuration of the optical-fiber holding component is not limited to the above-described embodiments and modifications. For example, when a plurality of optical fibers arranged in two rows are held by the optical-fiber holding component, the through holes may also be arranged in two rows corresponding to the arrangement of the plurality of optical fibers. The inner diameter of the through hole of the optical-fiber holding component does not need to be constant at each position along the through hole, and may vary at each position along the through hole. Both the covering-removed portion and the covered portion of the optical fiber may be inserted into the through hole of the optical-fiber holding component.

REFERENCE SIGNS LIST

1 optical coupling structure
2, 2A, 2B, 2C optical connector
2a first optical connector
2b second optical connector
10, 10A, 10B, 10C, 10D, 10E, 100, 110 optical-fiber holding component
10a front surface (an example of "first surface" in the present disclosure)
10b rear surface (an example of "second surface" in the present disclosure)
10c upper surface
10d lower surface
10e, 10f side surface
11, 11A, 11B, 111 through hole
11a, 11b, 31, 50a opening
11c constant-diameter portion
11d diameter-increasing portion
12, 13, 13A, 13B support portion
13a, 13b fixing hole
13c support surface

14a core
14b cladding
14c covering
15 injection hole
20, 120 optical fiber
20a tip surface (an example of "tip" in the present disclosure)
22 covering-removed portion
23 covered portion
25, 25A optical-fiber coupling structure body
26, 26A inserted portion
27, 27A protruding portion
30, 30A, 130 ferrule
30a front surface
30b rear surface
32, 32A accommodation hole
32a, 32b, 32c, 32d, 32e, 32g, S33 inner surface
32f V-shaped groove
33, 133 ferrule hole
34 guiding hole
35 window
40 guiding pin
50 spacer
60, 160 cured product of adhesive
120a tip surface
D22, D23, A, E outer diameter
D11, D11A, D33, B, C inner diameter
C11, C20, C33, C111, C133 central axis
L1, L2, L6 length
L3 distance
L4, L5, L7, L8 offset amount
P11 contact position
θ angle

## Claims

1. An optical-fiber holding component configured to be disposed inside a ferrule having a plurality of ferrule holes and to hold a plurality of optical fibers each inserted into a corresponding one of the plurality of ferrule holes, the optical-fiber holding component comprising:

   a first surface and a second surface aligned in a first direction; and
   a plurality of through holes extending between the first surface and the second surface through the optical-fiber holding component in the first direction, the plurality of through holes being arranged to be aligned in a second direction so as to correspond to the plurality of ferrule holes, the second direction intersecting the first direction, wherein each of the plurality of optical fibers includes

   an inserted portion inserted into and held in a corresponding through hole among the plurality of through holes, and
   a protruding portion protruding outside from the corresponding through hole and inserted into a corresponding ferrule hole among the plurality of ferrule holes,

   wherein a minimum value of an inner diameter of each of the through holes is greater than or equal to a maximum value of an outer diameter of each of the inserted portions, and
   wherein a tip of the protruding portion as viewed in the first direction is located inward of an inner surface of the corresponding ferrule hole when a central axis of the inserted portion is inclined inside the corresponding through hole to a maximum extent with respect to a central axis of the corresponding through hole in a state in which a central axis of the corresponding ferrule hole coincides, when viewed in the first direction, with the central axis of the corresponding through hole.

2. The optical-fiber holding component according to claim 1,
wherein a maximum value of an inner diameter of each of the through holes is less than a maximum value of an inner diameter of each of the ferrule holes.

3. The optical-fiber holding component according to claim 1 or claim 2,

   wherein each of the optical fibers includes

      a covering-removed portion where a portion of covering is removed from the tip, and
      a covered portion where the covering remains, and

   wherein only one of the covering-removed portion and the covered portion, the one being the covering-removed portion, is inserted as the inserted portion into the corresponding through hole.

4. The optical-fiber holding component according to claim 3, further comprising:
a support portion disposed between each of the through holes and the second surface in the first direction and configured to be able to support the covered portions arranged outside the through holes.

5. The optical-fiber holding component according to claim 1 or claim 2,

   wherein each of the optical fibers includes

      a covering-removed portion where a portion of covering is removed from the tip, and
      a covered portion where the covering remains, and

   wherein only one of the covering-removed portion and the covered portion, the one being the covered portion, is inserted as the inserted portion into the corresponding through hole.

6. The optical-fiber holding component according to any one of claim 1 to claim 5,
wherein each of the through holes includes

   a constant-diameter portion configured to be able to hold the inserted portion and having a constant inner diameter in the first direction, and
   a diameter-increasing portion formed between the constant-diameter portion and the second surface in the first direction and having an inner diameter increasing from the constant-diameter portion toward the second surface in the first direction.

7. The optical-fiber holding component according to any one of claim 1 to claim 6,
wherein each of the through holes is configured to hold the inserted portion such that the inserted portion is rotatable about the central axis of the inserted portion.

8. The optical-fiber holding component according to any one of claim 1 to claim 7,
wherein each of the optical fibers includes at least one core in a region offset from a central axis of the optical fiber.

9. The optical-fiber holding component according to any one of claim 1 to claim 8, further comprising:

   a third surface connecting the first surface and the second surface in the first direction; and
   a plurality of injection holes extending from the third surface so as to intersect the plurality of through holes and each being in communication individually with a corresponding one of the plurality of through holes, the plurality of injection holes being configured such that an adhesive for bonding the plurality of optical fibers to the plurality of through holes is injectable into the plurality of injection holes.

10. An optical-fiber coupling structure body comprising:

   the optical-fiber holding component according to any one of claim 1 to claim 9; and
   the plurality of optical fibers each inserted into the corresponding one of the plurality of through holes and each fixed to the corresponding one of the plurality of through holes by a cured product of an adhesive.

**11.** An optical connector comprising:

the optical-fiber coupling structure body according to claim 10; and
the ferrule into which the optical-fiber coupling structure body is inserted,
wherein the protruding portions of the plurality of optical fibers are each inserted into a corresponding one of the plurality of ferrule holes.

**12.** An optical coupling structure comprising:

a first optical connector and a second optical connector each as the optical connector according to claim 11,
wherein the first optical connector and the second optical connector face each other with a gap therebetween in the first direction.

**13.** A method of manufacturing the optical-fiber coupling structure body according to claim 10, the method comprising:

preparing an auxiliary optical-fiber holding component and a fixation optical-fiber holding component each as the optical-fiber holding component;
aligning the auxiliary optical-fiber holding component with the fixation optical-fiber holding component in the first direction;
inserting the optical fibers in the first direction from the through holes of the fixation optical-fiber holding component into the through holes of the auxiliary optical-fiber holding component in a state in which the auxiliary optical-fiber holding component and the fixation optical-fiber holding component are aligned in the first direction;
fixing the inserted portions to the fixation optical-fiber holding component by injecting an adhesive into the through holes of the fixation optical-fiber holding component and curing the adhesive in a state in which the inserted portions of the optical fibers are inserted into the through holes of the fixation optical-fiber holding component and in which the protruding portions of the optical fibers are inserted into the through holes of the auxiliary optical-fiber holding component; and
removing the auxiliary optical-fiber holding component in a state in which the inserted portions are fixed to the fixation optical-fiber holding component.

**14.** The method of manufacturing the optical-fiber coupling structure body according to claim 13,
wherein the aligning of the auxiliary optical-fiber holding component with the fixation optical-fiber holding component in the first direction includes
bringing the auxiliary optical-fiber holding component into contact with the fixation optical-fiber holding component in the first direction such that the through holes of the auxiliary optical-fiber holding component are in communication with the through holes of the fixation optical-fiber holding component in the first direction.

# FIG. 1

# FIG. 2

(a)

(b)

# FIG. 3

(a)

(b)

# FIG. 4

# FIG. 5

# FIG. 6

# FIG. 7

EP 4 733 821 A1

FIG. 8

29

**FIG. 9**

# FIG. 10

# FIG. 11

33  S33  20a  C20

25

20

C11

11a

10a

Z
Y ← ⊗ X

# FIG. 12

# FIG. 13

# FIG. 14

# FIG. 15

# FIG. 16a

# FIG. 16b

# FIG. 17

(a)

(b)

# FIG. 18a

# FIG. 18b

## INTERNATIONAL SEARCH REPORT

| | International application No. |
|---|---|
| | **PCT/JP2024/019398** |

**A. CLASSIFICATION OF SUBJECT MATTER**

*G02B 6/36*(2006.01)i
FI: G02B6/36

According to International Patent Classification (IPC) or to both national classification and IPC

**B. FIELDS SEARCHED**

Minimum documentation searched (classification system followed by classification symbols)

G02B6/24; G02B6/255; G02B6/36-6/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/135368 A1 (SUMITOMO ELECTRIC INDUSTRIES, LTD.) 26 July 2018 (2018-07-26) | 1-4, 6-8, 10-12 |
| | paragraphs [0023]-[0044], fig. 2-7, 10-11 | |
| Y | | 3-14 |
| Y | JP 09-203823 A (THE FURUKAWA ELECTRIC CO., LTD.) 05 August 1997 (1997-08-05) | 1-14 |
| | paragraphs [0013]-[0048], fig. 1-7 | |
| Y | JP 2019-533836 A (MOLEX LLC) 21 November 2019 (2019-11-21) | 1-14 |
| | paragraphs [0011]-[0029], fig. 1-10 | |
| Y | JP 2004-045751 A (SUMITOMO ELECTRIC INDUSTRIES, LTD.) 12 February 2004 (2004-02-12) | 1-14 |
| | paragraphs [0013]-[0020], fig. 1-2 | |
| Y | WO 2021/020073 A1 (FUJIKURA LTD.) 04 February 2021 (2021-02-04) | 5-14 |
| | paragraphs [0018]-[0036], fig. 1-6 | |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/019398** |

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022/039008 A1 (NITTO DENKO CORPORATION) 24 February 2022 (2022-02-24) paragraphs [0023]-[0076], fig. 1-3 | 5-14 |
| A | US 2018/0314012 A1 (REICHLE & DE-MASSARI AG) 01 November 2018 (2018-11-01) fig. 13 | 1-14 |

Form PCT/ISA/210 (second sheet) (July 2022)

**INTERNATIONAL SEARCH REPORT**
Information on patent family members

International application No.

**PCT/JP2024/019398**

| Patent document cited in search report | | | Publication date (day/month/year) | Patent family member(s) | | | Publication date (day/month/year) |
|---|---|---|---|---|---|---|---|
| WO | 2018/135368 | A1 | 26 July 2018 | US | 2019/0331865 | A1 | |
| | | | | paragraphs [0033]-[0054], fig. 2-7, 10-11 | | | |
| | | | | CN | 110178063 | A | |
| JP | 09-203823 | A | 05 August 1997 | (Family: none) | | | |
| JP | 2019-533836 | A | 21 November 2019 | US | 2020/0264386 | A1 | |
| | | | | paragraphs [0032]-[0050], fig. 1-10 | | | |
| | | | | CN | 109923454 | A | |
| JP | 2004-045751 | A | 12 February 2004 | (Family: none) | | | |
| WO | 2021/020073 | A1 | 04 February 2021 | US | 2022/0229245 | A1 | |
| | | | | paragraphs [0036]-[0056], fig. 1-6 | | | |
| | | | | CN | 113614600 | A | |
| WO | 2022/039008 | A1 | 24 February 2022 | US | 2023/0341633 | A1 | |
| | | | | paragraphs [0026]-[0079], fig. 1-3 | | | |
| | | | | EP | 4202512 | A1 | |
| | | | | CN | 115885203 | A | |
| | | | | KR | 10-2023-0051767 | A | |
| US | 2018/0314012 | A1 | 01 November 2018 | WO | 2017/067583 | A1 | |

Form PCT/ISA/210 (patent family annex) (July 2022)

**EP 4 733 821 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023103573 A
- WO 2018135368 A